(19) **Europäisches Patentamt / European Patent Office / Office européen des brevets**

(11) **EP 3 280 147 A1**

(12) **EUROPEAN PATENT APPLICATION**
published in accordance with Art. 153(4) EPC

(43) Date of publication:
**07.02.2018 Bulletin 2018/06**

(21) Application number: **16773417.7**

(22) Date of filing: **29.03.2016**

(51) Int Cl.:
*H04N 21/236* (2011.01)   *H04N 21/488* (2011.01)
*H04N 21/8547* (2011.01)   *H04N 21/8543* (2011.01)
*H04N 5/278* (2006.01)

(86) International application number:
**PCT/KR2016/003214**

(87) International publication number:
**WO 2016/159636 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2015 US 201562139801 P**

(71) Applicant: **LG Electronics Inc.**
**Yeongdeungpo-gu**
**Seoul 07336 (KR)**

(72) Inventors:
• **OH, Sejin**
  **Seoul 06772 (KR)**
• **SUH, Jongyeul**
  **Seoul 06772 (KR)**
• **HWANG, Soojin**
  **Seoul 06772 (KR)**
• **OH, Hyunmook**
  **Seoul 06772 (KR)**

(74) Representative: **Cabinet Plasseraud**
**66, rue de la Chaussée d'Antin**
**75440 Paris Cedex 09 (FR)**

(54) **METHOD AND APPARATUS FOR TRANSMITTING AND RECEIVING BROADCAST SIGNAL**

(57)    The present invention relates to an apparatus and a method for transmitting and receiving a broadcasting signal including a subtitle service. One embodiment of the present invention comprises the steps of: generating a video stream by encoding video data; generating a broadcast signal including the generated video stream and a subtitle stream; and transmitting the generated broadcast signal, wherein a header of the broadcast signal may include offset information for the presentation time of the subtitle stream.

FIG. 1

EP 3 280 147 A1

**Description**

[Technical Field]

The present invention relates to an apparatus and method for transmitting and receiving a broadcast signal.

[Background Art]

By virtue of the development of digital technologies and communication technologies, propagation and demand for audio/video centered multimedia content have remarkably expanded in various fields such as the Internet and personal media as well as broadcast and movie. In addition, consumer demand for immersive media for providing a three-dimensional effect through broadcasting and movies has increased. Along with propagation of a big TV screen at home in accordance with current trends as well as the development of display technologies, consumption for enjoying realistic contents with high image quality of high definition (HD) level or more. Immersive broadcast such as ultra high definition TV (UHDTV) as well as 3DTV has drawn attention as a next-generation broadcasting service and, in particular, ultra high definition (UHD) broadcasting services have been gradually discussed in accordance with current trends.
Currently, a broadcast subtitle service has been provided in the form of closed caption or digital video broadcasting (DVB) subtitle. Among these, in the case of DVB subtitle, a subtitle is provided in the form of a bitmap image and, thus, subtitles with different sizes are provided with respect to images with various sizes or a service needs to be provided by scaling a single type of subtitle. In the former case, efficiency may be lowered in terms of bandwidth and, in the latter case, sharpness may be lowered via scaling. In particular, recently, as a high resolution of broadcasting service via UHDTV has been actively discussed, there is a need for a new broadcast subtitle service in order to overcome this problem.

[Disclosure]

[Technical Problem]

An object of the present invention is to provide a method and apparatus for transmitting a broadcast signal, for increasing transmission efficiency.
Another object of the present invention is to provide a transmission apparatus and method for providing a subtitle service over a broadcast network.
Another object of the present invention is to provide an apparatus and method for synchronizing a subtitle service with a video audio stream.

[Technical Solution]

According to an embodiment of the present invention, a method of transmitting a broadcast signal may include generating a video stream by encoding video data, generating a broadcast signal including the generated video steam and a subtitle stream, and transmitting the generated broadcast signal. A header of the broadcast signal may include offset information for a presentation time of the subtitle stream.
According to an embodiment of the present invention, a method of receiving a broadcast signal may include receiving a broadcast signal, a header of the broadcast signal including offset information for a presentation time of a subtitle stream, demultiplexing the received broadcast signal into a video stream and the subtitle stream, decoding each of the video stream and the subtitle stream, and synchronizing the video stream with the subtitle stream.

[Advantageous Effects]

According to an embodiment of the present invention, the transmission efficiency of a broadcasting system may be increased.
According to an embodiment of the present invention, a subtitle service may be provided over a broadcasting network.
According to an embodiment of the present invention, a broadcasting receiver may extract a subtitle from a broadcast signal and display the extracted subtitle.

[Description of Drawings]

FIG. 1 is a diagram illustrating an XML-based broadcast subtitle service according to an embodiment of the present invention.

FIG. 2 is a diagram illustrating a basic concept for transmitting an XML subtitle in a broadcast signal according to an embodiment of the present invention.

FIG. 3 is a diagram illustrating a method of transmitting an XML broadcast subtitle according to another embodiment of the present invention.

FIG. 4 is a diagram illustrating a method of separating a head and a body included in an XML subtitle into different ESs and transmitting the XML subtitle according to an embodiment of the present invention.

FIG. 5 is a diagram illustrating a method of separating a head and a body included in an XML subtitle into different ESs and transmitting the ESs according to another embodiment of the present invention.

FIG. 6 is a diagram illustrating a configuration of transport_packet according to an embodiment of the present invention.

FIG. 7 is a diagram illustrating a configuration of an adaptation field according to an embodiment of the present invention.

FIG. 8 is a diagram illustrating a configuration of PES_packet according to an embodiment of the present invention.

FIG. 9 is a diagram illustrating PES_data_field according to an embodiment of the present invention.

FIG. 10 is a diagram illustrating PES_data_field according to an embodiment of the present invention.

FIG. 11 is a diagram illustrating timed text data corresponding to a coding format according to an embodiment of the present invention.

FIG. 12 is a diagram illustrating an MPEG-2 TS packet including timed text data according to an embodiment of the present invention.

FIG. 13 is a diagram illustrating a method of transmitting timed text according to an embodiment of the present invention.

FIG. 14 is a diagram illustrating a PES data field including subtitle data according to an embodiment of the present invention.

FIG. 15 is a diagram illustrating a method of transmitting subtitle data, using offset information according to an embodiment of the present invention.

FIG. 16 is a diagram illustrating a PES data field including subtitle data according to an embodiment of the present invention.

FIG. 17 is a diagram illustrating an adaptation field including subtitle-related information according to an embodiment of the present invention.

FIG. 18 is a diagram illustrating a method of signaling a timeline according to an embodiment of the present invention.

FIG. 19 is a diagram illustrating a method of applying an XML subtitle to a DVB subtitle service according to an embodiment of the present invention.

FIG. 20 is a diagram illustrating a configuration of component_descriptor according to an embodiment of the present invention.

FIG. 21 is a diagram illustrating a method of applying an XML subtitle to a DVB subtitle service according to an embodiment of the present invention.

FIG. 22 is a diagram illustrating a configuration of subtitle_descriptor according to an embodiment of the present invention.

FIG. 23 is a block diagram illustrating a broadcasting transmitter according to an embodiment of the present invention.

FIG. 24 is a block diagram illustrating a broadcasting receiver according to an embodiment of the present invention.

FIG. 25 is a diagram illustrating a detailed configuration of a broadcasting receiver according to an embodiment of the present invention.

FIG. 27 is a diagram illustrating a method of transmitting a broadcast signal including XML subtitles according to an embodiment of the present invention.

FIG. 28 is a diagram illustrating a method of receiving a broadcast signal including XML subtitles according to an embodiment of the present invention.

[Best Mode]

As a broadcasting service has begun to be provided by Internet protocol (IP) as a next-generation broadcasting service, a new subtitle service standard has been established to replace typical broadcast subtitles. In future, a broadcasting service is expected to be provided in the form of convergence between existing broadcasting and IP and, in this case, it is not efficient to separately service subtitles complying with different standards.

Examples of the IP broadcast subtitles service standard may include the XML-based time text markup language (TTML), Society of Motion Picture and Television Engineers Timed Text (SMPTE-TT), and European Broadcasting Union time text (EBU-TT-D). These are appropriate for Dynamic Adaptive Streaming over HTTP (DASH)-based services that need to support various resolutions in that a subtitle may be serviced independently of the size of an image. There has been an attempt to use an XML subtitle in a UHD broadcasting service, taking this advantage and, thus, there is a need for a method of transmitting an XML subtitle established to be appropriate for media and IP streaming according to an existing broadcasting service.

Recently, standards of XML language-based subtitles such as time text markup language (TTML) and EBU time text (EBU-TT) have been established. Although the standards are intended for a subtitle service in an environment of media and IP streaming, standardization organizations such as DVB and ATSC have requested use of the standards for a broadcasting service. The request is intended to utilize the advantage that the standards may be used adaptively to various service environments (e.g., HD and UHD) based on the same subtitle source as well as the advantage that an integrated subtitle source may be used in various broadcasting environments.

For the understanding of the present invention and for the convenience of description of the present invention, terms and abbreviations are defined as follows.

High Efficiency Video Coding (HEVC) is a high-efficiency video coding standard for providing the same video quality with about the double of the compressibility of existing H.265/AVC technologies.

Extensible Markup Language (XML) is a language formed by improving HTML. XML enhances a function of constructing a homepage, a search function, and so on, and facilitates complex data processing of a client system. In the present invention, XML is used as a language for building subtitle data, and an XML subtitle may include a head and a body.

Presentation Time Stamp (PTS) may refer to a value indicating a time at which a decoded access unit is reproduced. In the present invention, the PTS may be used to synchronize a video ES and a subtitle ES.

Elementary Stream (ES) may refer to an output of a data encoder. That is, outputs of a video encoder and an audio encoder may be defined as a video ES and an audio ES, respectively. In the present invention, an XML subtitle ES may be defined and used.

Packetized Elementary Stream (PES) may be formed by packetizing an ES and may refer to a stream of packets with a header.

Transport Stream (TS) may refer to a stream to be transmitted, including one or more programs in an MPEG-2 system. TSs may be used in transmission media with transmission errors. In the present invention, TS may refer to a transport stream which is configured by multiplexing at least two of a video ES, an audio ES, and a subtitle ES, and transmitted.

The present invention may describe a method of transmitting an XML timed text-based subtitle service in an MPEG2-TS-based manner. The present invention may described a method of predicting a presentation time of a subtitle, for synchronization between the subtitle and an audio/video stream based on a presentation timestamp (PTS) of a broadcast stream such as an MPEG-2 TS. Further, the present invention may describe a method of signaling an offset of a presentation time of a subtitle, for PTS-based synchronization between the subtitle and an audio or video stream of a broadcast stream such as an MPEG-2 TS.

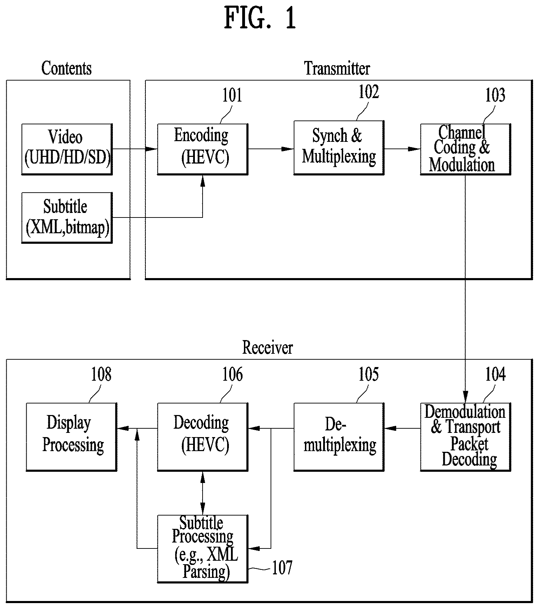

FIG. 1 is a diagram illustrating an XML-based broadcast subtitle service according to an embodiment of the present invention. FIG. 1 is a diagram illustrating a transmitter, a receiver, and an end-to-end system, for a digital broadcasting service. Because an XML-based subtitle used in the present invention is not affected by the size of an image, it may be applied to all of UHD/HD/SD.

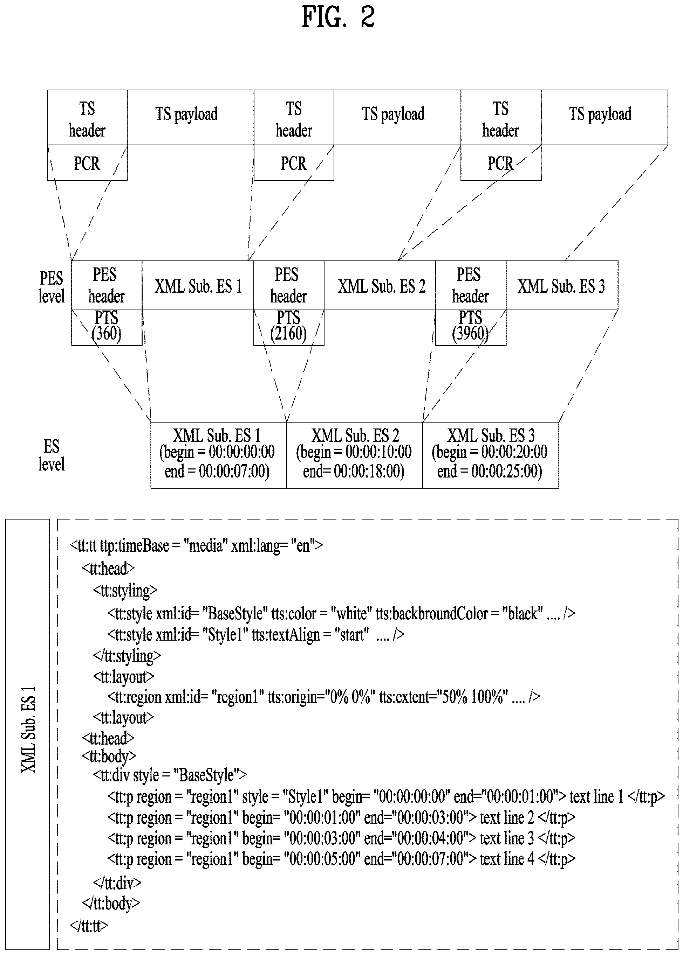

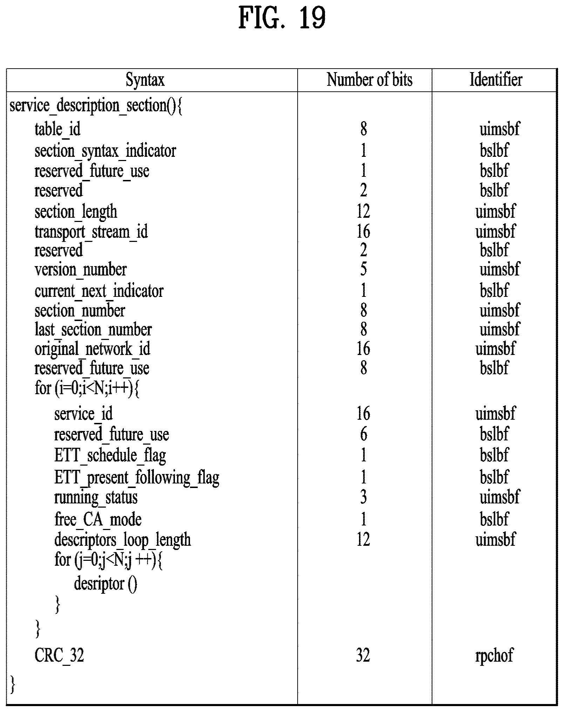

The transmitter transmits a compressed image and an XML subtitle modified for transmission through a multiplexer. Herein, PTS information is used for synchronization between the two data. In FIG. 1, the transmitter may receive video data and subtitle information. The resolution of the video data input to the transmitter may be UHD, HD, or SD. In addition, the subtitle information input to the transmitter may be written in XML or a bitmap. The video data input to the transmitter may be encoded by the transmitter (101). The transmitter may use High Efficiency Video Coding (HEVC) as an encoding scheme for video data. The transmitter may synchronize and multiplex the encoded video data and the XML subtitle (102). Here, the XML subtitle may be modified for transmission. That is, the XML subtitle may be modified into an XML subtitle ES and an XML subtitle PES, for transmission. As described above, the encoded video data and the XML subtitle may be synchronized using PTS information. The transmitter may perform channel coding and modulation (103) on the synchronized and multiplexed data and then transmit the data as a broadcast signal. The transmitter will be described in detail with reference to FIGS. 2 to 5, and FIGS. 7 to 23.

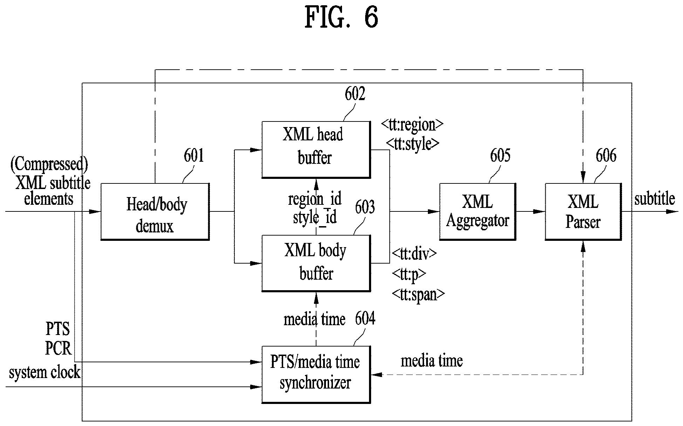

The receiver may perform demultiplexing and video decoding on a subtitle and provide the subtitle through an XML parser. Herein, synchronization is performed between the video data and the subtitle based on the PTS. The receiver may demodulate the received broadcast signal and perform transport packet (TP) decoding on the broadcast signal (104). The decoded transport packet may be demultiplexed 105 and then input to a video decoder 106 and an XML parser 107. Herein, the video decoder 106 may decode UHD, HD, or SD video data according to the resolution of the received video data. The video decoder 106 may use High Efficiency Video Coding (HEVC) as a decoding scheme for the video data. The XML parser 107 may extract the XML subtitle. During this procedure, the receiver may synchronize the video data and the XML subtitle based on the PTS. The decoded video data and XML subtitle may be processed by a display processor 108 and then displayed. The receiver will be described in detail with reference to FIGS. 6, 24, 25, and 26.

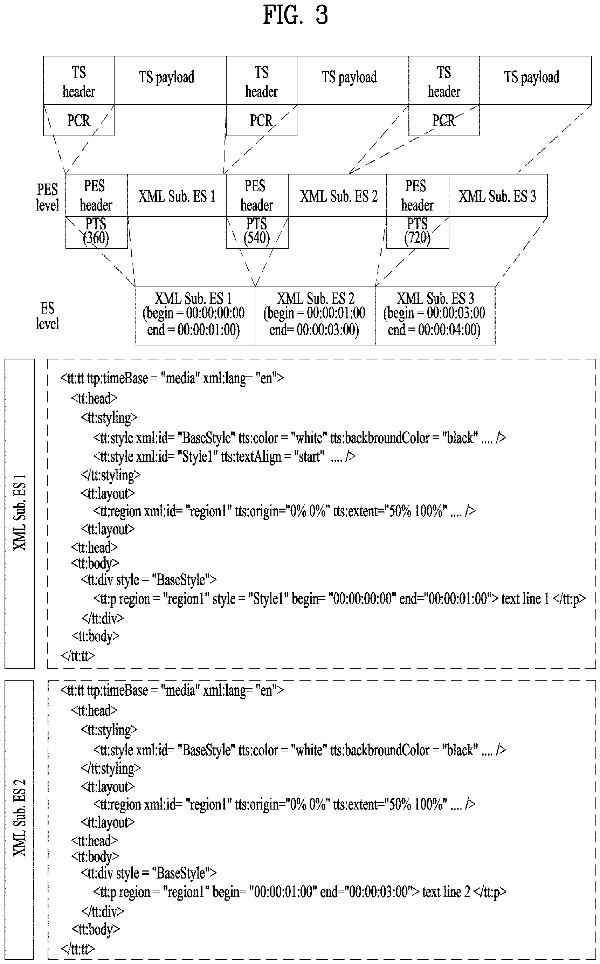

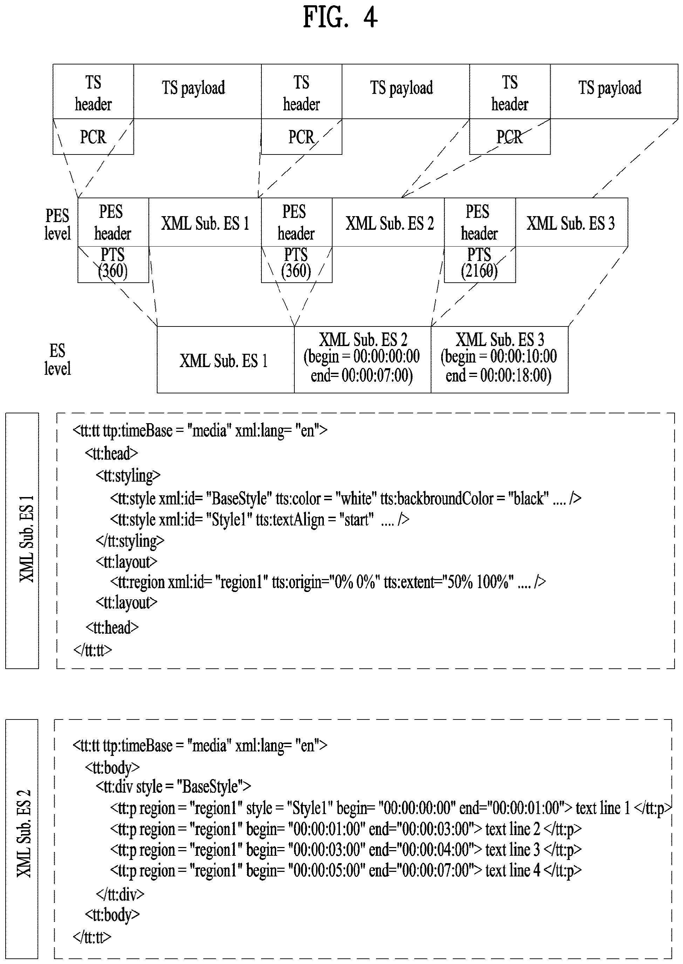

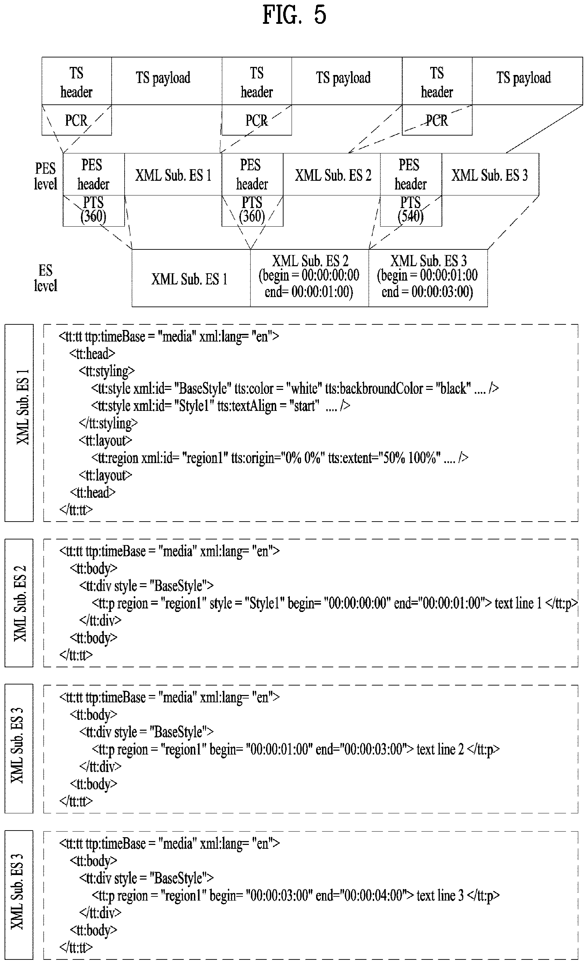

A method of transmitting an XML subtitle in an MPEG2-TS by a transmitter may include two methods of scenario 1 and scenario 2. Scenario 1 is a method of configuring an ES with all information items for subtitle configuration and scenario 2 is a method of separating overlapping information of subtitle information and transmitting the subtitle information. FIGS. 2 and 3 illustrate a subtitle transmission method based on scenario 1 and FIGS. 4 and 5 illustrate a subtitle transmission method based on scenario 2.

FIG. 2 is a diagram illustrating a basic concept for transmitting an XML subtitle in a broadcast signal according to an embodiment of the present invention. An upper part of FIG. 2 is a diagram for explanation of a procedure of converting XML subtitle data into a stream. The subtitle data may be converted into an XML subtitle ES at an ES level. The XML subtitle ES may include begin and end time information of the ES. In addition, the XML subtitle ES may include subtitle data included at the corresponding begin and end time. For example, an XML subtitle ES1 may include subtitle information between begin time 00:00:00:00 and end time 00:00:07:00, an XML subtitle ES2 may include subtitle information between begin time 00:00:10:00 and end time 00:00:18:00, and an XML subtitle ES3 may include subtitle information between begin time 00:00:20:00 and end time 00:00:25:00.

Each ES may be converted into a PES at a PES level. The PES may be formed by packetizing an ES and each ES may be packetized together with a PES header. Here, the PES header may include PTS information. In FIG. 2, the XML subtitle ES 1 may have PTS 360, the XML subtitle ES2 may have PTS 2160, and the XML subtitle ES3 may have PTS 3960. Each PES may be converted into a TS via a multiplexing procedure, and the TS may include a TS header and a TS payload. The TS header may include PCR information. The PTS information and the PCR information may be used for synchronization between a subtitle and a video, and a subtitle and a video having the same PTS information may be synchronized with each other and may be displayed. The TS payload may include a subtitle PES described in the present invention.

A lower part of FIG. 2 illustrates detailed information included in the XML subtitle ES1. Each XML subtitle ES may be started by <tt:tt> and may include a head and a body as elements. <tt:tt ttp:timeBase = "media" xml:lang= "en"> may indicate that a time base is media time and a language is English. <tt:head> may indicate the start of a head of subtitle information, and <tt:styling> may indicate that styling information in the head is started. <tt:style xml:id= "BaseStyle" tts:color = "white" tts:backgroundColor = "black" .... /> may indicate that a style ID is a base style and the base style defines a subtitle color as white and a background color as black. <tt:style xml:id= "Style1" tts:textAlign = "start" .... /> may indicate that a style Id is style1 and text of the subtitle is aligned according to a start coordinate in style1. </tt:styling> may indicate that listing of the styling information is ended. <tt:layout> may indicate that layout information of the subtitle is started and <tt:region xml:id= "region1" tts:origin="0% 0%" tts:extent="50% 100%" .... /> may define a region 1 for displaying the subtitle and set a start point and size of the region 1. </tt:layout> may indicate that listing of the layout information is ended. </tt:head> may indicate that the head is ended and <tt:body> may indicate that the body is started. <tt:div style = "BaseStyle"> included in the body may indicate that a subtitle of a corresponding division included in the body is a base style defined in the head. <tt:p region = "region1" style = "Style1" begin= "00:00:00:00" end="00:00:01:00"> text line 1 </tt:p> may indicate that a text line 1 between begin time 00:00:00:00 and end time 00:00:01:00 is displayed in the region 1 defined in the head according to style1. <tt:p region = "region1" begin= "00:00:01:00" end="00:00:03:00"> text line 2 </tt:p> may indicate that a text line 2 between begin time 00:00:01:00 and end time 00:00:03:00 is displayed in the region 1 defined in the head. <tt:p region = "region1" begin= "00:00:03:00" end="00:00:04:00"> text line 3 </tt:p> may indicate that a text line 3 between begin time 00:00:03:00 and end time 00:00:04:00 is displayed in the region 1 defined in the head. <tt:p region = "region1" begin= "00:00:05:00" end="00:00:07:00"> text line 4 </tt:p> may indicate that a text line 4 between begin time 00:00:05:00 and end time 00:00:07:00 is displayed in the region 1 defined in the head. </tt:div>, </tt:body>, and </tt:tt> may indicate that listing of information on a division, the body, and the subtitle is ended.

In FIG. 2, the XML subtitle is schematically illustrated based on EBU-TT-D. <tt:tt> may include <tt:head> and <tt:body>. In the EBU-TT-D subtitle, information for image configuration may be positioned in <tt:head> and subtitle data and time information may be positioned in <tt:body>. Thereamong, the time information may be indicated by begin and end in <tt:div>. Generally, the XML subtitle aimed at media may be configured with one <tt:head> and one <tt:body>. However, according to the present invention, basically, one XML subtitle may be divided into unit elements appropriate for a broadcasting service and may be transmitted. Here, the unit element may be a time unit, a body size unit, or a div unit.

As described above, FIG. 2 illustrates a method of configuring an elementary stream (ES) with all information items for subtitle configuration according to scenario 1. When a transmitter transmits a subtitle, all elements between begin time and end time of a subtitle for one program may be transmitted in one <tt:tt> but, in this case, it may be difficult to appropriately handle a situation such as transmission error or channel change. Accordingly, the transmitter may separate the subtitle according to time and transmit the subtitle. As a first method of separating the subtitle according to time, <tt:tt> may be configured and transmitted with respect to unit time as illustrated in FIG. 2. Each <tt:tt> configured with respect to unit time may include all information items for subtitle configuration. That is, each <tt:tt> includes all of image configuration, time, and subtitle information for a subtitle service with respect to a predetermined period or unit time and, thus, additional information is not necessary. In this case, video and audio synchronization is performed based on a PTS and, thus, according to the present invention, PTS information in a PES header may also be used and Program Clock Reference (PCR) as reference time may be provided through the TS header as a method of using the PTS. In this case, the PTS may be synchronized with time for first displaying a subtitle.

FIG. 3 is a diagram illustrating a method of transmitting an XML broadcast subtitle according to another embodiment of the present invention. XML subtitle data may be transmitted in a separate ES for each begin time of subtitle data. An upper part of FIG. 3 is a diagram for explanation of a procedure of converting XML subtitle data into a stream. The subtitle data may be converted into an XML subtitle ES at the ES level. When the subtitle data is converted into an XML subtitle ES, different XML subtitle ESs may be generated for respective display times of the subtitle data, i.e., respective begin times of the subtitle. The XML subtitle ES may include begin and end time information of the ES. The XML subtitle ES may include subtitle data included at the corresponding begin and end time. For example, an XML subtitle ES1 may include subtitle information between begin time 00:00:00:00 and end time 00:00:01:00, an XML subtitle ES2 may include subtitle information between begin time 00:00:01:00 and end time 00:00:03:00, and an XML subtitle ES3 may include subtitle information between begin time 00:00:03:00 and end time 00:00:04:00.

Each ES may be converted into a PES at the PES level. The PES may be formed by packetizing an ES and each ES may be packetized together with a PES header. Here, the PES header may include PTS information. In FIG. 3, the XML subtitle ES1 may have PTS 360, the XML subtitle ES2 may have PTS 540, and the XML subtitle ES3 may have PTS 720. Each PES may be converted into a TS via a multiplexing procedure and the TS may include a TS header and a TS payload. The TS header may include PCR information. The PTS information and the PCR information may be used for synchronization between a subtitle and video, and a subtitle and video having the same PTS information may be synchronized with each other and displayed. The TS payload may include a subtitle PES described in the present invention.

A lower part of FIG. 3 illustrates detailed information included in the XML subtitle ES1 and the XML subtitle ES2. A repeated description of FIG. 2 will be omitted here. The XML subtitle ES 1 and XML subtitle ES2 of FIG. 3 may have similar subtitle data information and may be different in that subtitle contents according to begin time of a subtitle are different. That is, the XML subtitle ES1 may include <tt:p region = "region1" style = "Style1" begin= "00:00:00:00" end="00:00:01:00"> text line 1 </tt:p> and the XML subtitle ES2 may include <tt:p region = "region1" begin= "00:00:01:00" end="00:00:03:00"> text line 2 </tt:p>. That is, a text line 1 and a text line 2 may be transmitted in separate respective ESs because the text lines 1 and 2 have different begin times, that is, 00:00:00:00 and 00:00:01:00.

The method of providing a subtitle service with only information in the ES described with reference to FIG. 2, that is, the method of transmitting <tt:head> and <tt:body> in the ES may be expanded to consider a method of aligning presentation time (i.e., 'begin' in <tt:div>) of the XML subtitle with a PTS. That is, as illustrated in FIG. 3, <tt:body> may be divided into a unit of <tt:p> according to time and may be transmitted together with corresponding required <tt:head>, and only one begin time is present in the ES and, thus, a PTS of the PES header may be synchronized with begin time (begin timing) indicated by begin of <tt:p>. That is, synchronization between the XML subtitle and video audio may be performed with only the PTS of the PES header.

Although the aforementioned method of scenario 1 is advantageous in that information (syntax according to XML grammar) required for subtitle reproduction can be processed at one time, a bandwidth may be ineffectively used since overlapping information is transmitted. As a method for overcoming this, overlapping information and subtitle information may be separated and transmitted. That is, <tt:body> containing subtitle information according to time and <tt:head> containing style and region information referred to show the subtitle information through a screen may be separately transmitted. Hereinafter, a method of separating overlapping information of an XML subtitle and configuring an ES according to scenario 2 will be described.

FIG. 4 is a diagram of a method of separating a head and a body included in an XML subtitle to different ESs and transmitting the XML subtitle according to an embodiment of the present invention. In this case, <tt:head> stored in a buffer of a receiver needs to have <tt:layout> and <tt:styling> information required for <tt:body> and may refer to a plurality of <tt:body> that is subsequent to <tt:head> according to a decoding/presentation order. When <tt:head> needs to refer to new <tt:layout> and <tt:styling> that are not present in the existing <tt:head>, a transmitter may newly transmit <tt:head> or may transmit only required information (e.g., <tt:style> and <tt:region>) and then perform update. A transmission period of <tt:head> may comply with a video random access point (RAP) in order to provide a stable service in an environment such as channel change and may have an epoch concept like in an existing DVB subtitle. In the embodiment of FIG. 4, a PTS of each PES header may be aligned with begin time of a first shown subtitle of a corresponding ES and end time of the subtitle and begin time of a subsequent subtitle may be acquired via calculation. Also, a case in which <tt:body> is subdivided according to a time unit like in the described example in scenario 1 may be considered.

XML subtitle data may be transmitted while a head and a body of the subtitle data are included in separate respective ESs. An upper part of FIG. 4 is a diagram for explanation of a procedure of converting XML subtitle data into a stream. The subtitle data may be converted into an XML subtitle ES at the ES level. When the subtitle data is converted into the XML subtitle ES, the head and the body of the subtitle data may be included in different XML subtitle ESs, respectively. The XML subtitle ES may include begin and end time information of the ES. In addition, the XML subtitle ES may include subtitle data included at the corresponding begin and end time. However, an XML subtitle ES including only head information may not include begin time, end time, and subtitle text data. For example, in FIG. 4, an XML subtitle ES1 includes only head information and, thus, begin and end time information is not illustrated. However, an XML subtitle ES2 may include subtitle information between begin time 00:00:00:00 and end time 00:00:07:00 and an XML subtitle ES3 may include subtitle information between begin time 00:00:10:00 and end time 00:00:18:00.

Each ES may be converted into a PES at the PES level. The PES may be formed by packetizing an ES and each ES may be packetized together with a PES header. Here, the PES header may include PTS information. In FIG. 4, the XML subtitle ES 1 may have PTS 360, the XML subtitle ES2 may have PTS 360, and the XML subtitle ES3 may have PTS 2160. The XML subtitle ES1 and the XML subtitle ES2 may include head and body information of the same subtitle data and, thus, may have the same PTS value.

Each PES may be converted into a TS via a multiplexing procedure and the TS may include a TS header and a TS payload. The TS header may include PCR information. The PTS information and the PCR information may be used for synchronization between a subtitle and video, and a subtitle and video having the same PTS information may be synchronized with each other and displayed. The TS payload may include a subtitle PES described in the present invention.

A lower part of FIG. 4 illustrates detailed information included in the XML subtitle ES1 and the XML subtitle ES2. The XML subtitle ES1 and XML subtitle ES2 of FIG. 4 may each include head and body information of the same subtitle data. That is, the, XML subtitle ES1 may include information from <tt:head> to </tt:head> and the XML subtitle ES2 may include information from <tt:body> to </tt:body>. That is, the head may include style information and layout information of the subtitle and the body may include text information of the subtitle.

FIG. 5 is a method of separating a head and a body included in an XML subtitle to different ESs and transmitting the ESs according to another embodiment of the present invention. A transmitter may separate and transmit <tt:body> according to begin time of each subtitle as illustrated in FIG. 5. Start time of each subtitle may have one to one correspondence with a PTS of a PES header.

XML subtitle data may be transmitted while a head and a body of the subtitle data are included in separate respective ESs and the body is included in a separate ES for each begin time of subtitle data. An upper part of FIG. 5 is a diagram for explanation of a converting XML subtitle data into a stream. The subtitle data may be converted into an XML subtitle ES at the ES level. When the subtitle data is converted into the XML subtitle ES, the head and the body of the subtitle data may be included in different XML subtitle ESs, respectively. In addition, the head and the body of the subtitle data may be included in different XML subtitle ESs for respective display times of subtitle data included in the body of the subtitle data, , i.e., respective begin times of the subtitle.

The XML subtitle ES may include begin time and end time of the ES. In addition, the XML subtitle ES may include subtitle data included in corresponding begin and end time. However, an XML subtitle ES including only head information may not include begin time, end time, and subtitle text data. For example, in FIG. 5, an XML subtitle ES1 includes only head information and, thus, begin and end time information is not illustrated. However, an XML subtitle ES2 may include subtitle information between begin time 00:00:00:00 and end time 00:00:01:00 and an XML subtitle ES3 may include subtitle information between begin time 00:00:01:00 and end time 00:00:03:00.

Each ES may be converted into a PES at the PES level. The PES may be formed by packetizing an ES and each ES may be packetized together with a PES header. Here, the PES header may include PTS information. In FIG. 5, the XML subtitle ES1 may have PTS 360, the XML subtitle ES2 may have PTS 360, and the XML subtitle ES3 may have PTS 540. The XML subtitle ES1 and the XML subtitle ES2 may include head and body information of the same subtitle data and, thus, may have the same PTS value.

Each PES may be converted into a TS via a multiplexing procedure and the TS may include a TS header and a TS payload. The TS header may include PCR information. The PTS information and the PCR information may be used for synchronization between a subtitle and video, and a subtitle and video having the same PTS information may be synchronized with each other and displayed. The TS payload may include a subtitle PES described in the present invention.

A lower part of FIG. 5 illustrates detailed information included in the XML subtitle ES1 and the XML subtitle ES2. A repeated description of FIG. 2 will be omitted here. The XML subtitle ES 1 and XML subtitle ES2 of FIG. 5 may each include head and body information of the same subtitle data. That is, the XML subtitle ES1 may include information from <tt:head> to </tt:head> and the XML subtitle ES2 may include information from <tt:body> to </tt:body>. That is, the head may include style information and layout information of the subtitle and the body may include text information of the subtitle. In addition, the text information of the subtitle included in the body may be transmitted in the XML subtitle ES2, the XML subtitle ES3, and the XML subtitle ES4 according to respective begin times of subtitle data.

Here, each XML subtitle ES may transmit whole grammar in <tt:body> or <tt:div > but may be transmitted in a low unit of <tt:p> in order to enhance efficiency. That is, in FIG. 5, each XML subtitle ES may include the remaining information except for overlapping information. Information that overlaps and is not included in an ES may be processed by an XML decoder of the receiver. For example, in FIG. 5, the XML subtitle ES1 may be configured with whole grammar including <tt:head>. <tt:tt ttp:timeBase = "media" xml:lang= "en"> and </tt:tt> of content of the XML subtitle ES2 generated subsequently to the XML subtitle ES 1 overlaps with content of the XML subtitle ES 1 and, thus the XML subtitle ES2 may be configured by excluding this. In addition, the XML subtitle ES3 may be configured except for overlapping content with content of the XML subtitle ES1 and the XML subtitle ES2. That is, <tt:tt ttp:timeBase = "media" xml:lang= "en">, <tt:body>, </tt:body>, and </tt:tt> may be excluded from configuration of the XML subtitle ES3. Similarly, the XML subtitle ES4 may be configured except for <tt:tt ttp:timeBase = "media" xml:lang= "en">, <tt:body>, <tt:div style = "BaseStyle">, </tt:div>, </tt:body>, and </tt:tt> from the illustrated content. Contents excluded from the XML subtitle ES due to overlapping may be restored or processed by a decoder of the receiver, as described above.

FIG. 6 is a diagram illustrating a configuration of an XML subtitle decoder according to another embodiment of the present invention. FIG. 6 is about the above-described scenario 2. The XML decoder may include at least one of a head/body demultiplexer (DEMUX) 601, an XML head buffer 602, an XML body buffer 603, a PTS/media time synchronizer 604, an XML aggregator 605, and/or an XML parser 606. In scenario 1, XML subtitle elements may be transmitted directly from a head/body DEMUX 2101 to an XML parser 2105, as illustrated.

After acquiring PCR information from a TS header and PTS information from a PES header, a broadcast signal receiver including an XML subtitle decoder may convert a PTS to a media time within an XML subtitle through a PTS/media time synchronizer. If XML subtitle elements are received in synchronization with the PTS, the XML subtitle elements may be synchronized with a video through the PTS and a system clock without any additional conversion in the PTS/media time synchronizer.

The head/body DEMUX 601 may receive XML subtitle elements, and demultiplex the received XML subtitle elements into a head element and a body element. For packetized XML subtitle elements acquired from a PES, the head/body DEMUX 601 may separate a head element (<tt:head>) from a body element (<tt:body>) and store the head element and the body element in the XML head buffer 602 and the XML body buffer 603, respectively, for which a later-described embodiment of segment_type may be referred to.

Herein, <tt:head> may be classified as follows by the later-described head_update_type.

a) A case in which the current transmitted head information is information added to previous head information.

b) A case in which it is possible to process an XML subtitle with the current transmitted head information for a next predetermined time period.

c) A case in which the current transmitted head information is used, while previous head information is discarded.

The XML head buffer 602 may update the head information with the additional head information in case a), use the new information without emptying the buffer in case b), and use the new information, while emptying the buffer in case c). The XML head buffer 602 may transmit subtitle information <tt:region> and <tt:style> to the XML aggregator 605. Herein, <tt:region> and <tt:style> may be based on region_id and style_id received from the later-described XML body buffer 603.

Further, <tt:body> may be classified as follows according to the later-described content_type.

a) A case in which the subtitle is transmitted according to a begin time (line update on the same page).

b) A case in which a page is updated or the subtitle is transmitted in meaning units (update on a page basis).

The XML body buffer 603 may transmit subtitle information (<tt:div>, <tt:p> and <tt:span>) to the XML aggregator 605. Herein, a reference for information needed to display information included in the body on a screen, region_id, and a reference for the font, size, and color of the subtitle, style_id may be provided to the XML head buffer 602. As such, the corresponding information, that is, <tt:region> and <tt:style> may be transmitted from the XML head buffer 602 to the XML aggregator 605.

The PTS/media time synchronizer 604 may receive PCR information acquired from a TS header, PTS information acquired from a PES header, and system clock information. The PTS/media time synchronizer 604 may convert a PTS to a media time within an XML subtitle. If the XML subtitle elements are received in synchronization with the PTS, the PTS/media time synchronizer 604 may synchronize the XML subtitle with a video using the system clock without any additional conversion.

The XML aggregator 605 may configure an XML subtitle based on the information received from the XML head buffer 602 and the XML body buffer 603, and output the XML subtitle to the XML parser 606. The XML parser may parse the received XML subtitle. A final output time of the parsed subtitle may be determined according to the media time based on the signal synchronized with the video through the PTS/media time synchronizer 604. Further, for the subtitle synchronized with the PTS, the XML parser 605 may provide a signal such that the subtitle may output immediately without additional time processing.

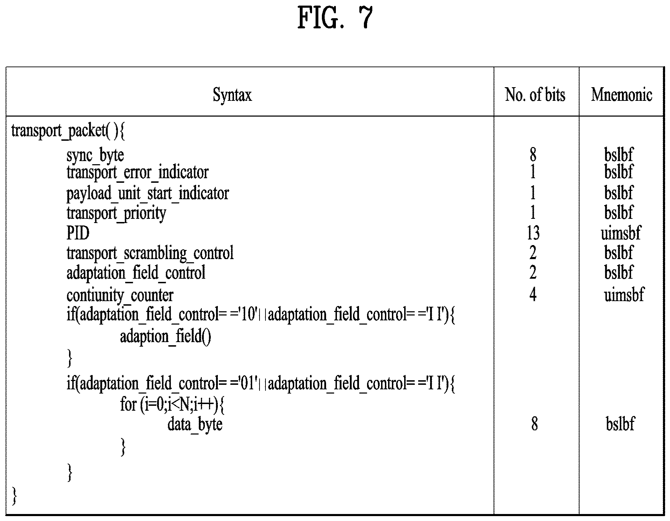

FIG. 7 is a diagram illustrating a configuration of transport_packet according to an embodiment of the present invention. The transport_packet may include a sync_byte field, a transport_error_indcator field, a payload_unit_start_indicator field, a transport_priority field, a PID field, a transport_scrambling_control field, an adaptation_field_control field, a continuity_counter field, and/or a data_byte field.

The sync_byte field may be a fixed 8-bit field with a value of '01000111'(0x47). This may indicate start of a TS packet.

The transport_error_indcator field may be a 1-bit flag and may indicate that at least one unrestorable bit error is present in a corresponding TS packet when a value of the field is set to 1.

The payload_unit_start_indicator field may be a 1-bit flag and may indicate that a TS packet includes a PES packet or PSI data.

The transport_priority field may be a 1-bit indicator and may indicate higher priority than other packets having the same PID when a value of the field is set to 1.

The PID field may be a 13-bit field and may indicate a type of data included in a packet payload.

The transport_scrambling_control field may be a 2-bit field and may indicate a scrambling mode of a TS packet payload.

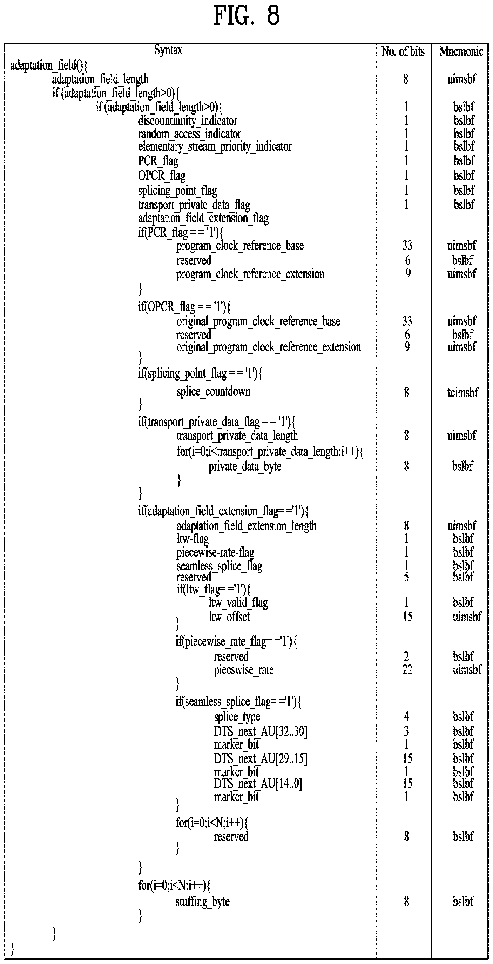

The adaptation_field_control field may be a 2-bit field and may indicate whether an adaptation field and/or a payload are included subsequently to a corresponding TS packet. When the adaptation_field_control field has a value of 10 or 11, this may indicate that an adaptation field is included subsequently to a corresponding TS packet header, which will be described in detail with reference to FIG. 8.

The continuity_counter field may be a 4-bit field and may be a sequence, a value of which increases every TS packet having the same PID.

The data_byte field may be applied when a payload is present, that is, when the adaptation_field_control has a value of 01 or 11, and in the present invention, the data_byte field may include a PES packet including subtitle data.

FIG. 8 is a diagram illustrating a configuration of an adaptation field according to an embodiment of the present invention. The adaptation field may include an adaptation_field_length field, a discontinuity_indicator field, a random_access_indicator field, an elementary_stream_priority_indicator field, a PCR_flag, an OPCR_flag, a splicing_point_flag, a transport_private_data_flag, an adaptation_field_extension_flag, a program_clock_reference_base field, a program_clock_reference_extension field, an original_program_clock_reference_base field, an original_program_clock_reference_extension field, a splice_countdown field, a transport_private_data_length field, a private_data_byte field, an adaptation_field_extension_length field, an ltw_flag (legal_time_window_flag), a piecewise_rate_flag, a seamless_splice_flag, an ltw_valid_flag (legal time window_valid_flag), an ltw_offset (legal time window_offset) field, a piecewise_rate field, a splice_type field, a DTS_next_au (decoding_time_stamp_next_access_unit) field, and/or a stuffing_byte field.

The adaptation_field_length field may be an 8-bit field and may indicate a byte number of information subsequent to the adaptation_field_length field of the adaptation_field.

The discontinuity_indicator field may be a 1-bit field and may indicate that a discontinuous state of a current TS packet is true when a value of the field is set to 1.

The random_access_indicator field may be a 1-bit field and may indicate that a current TS packet and a next TS packet having the same PID as possible include information for assisting random access. That is, the field may indicate a case in which a corresponding ES packet is used in random access and may be 1 when an XML subtitle is aligned with a RAP. The field may be used to align a period for transmitting reconfiguration information of the XML subtitle with RAP, in particular, a period for separately transmitting head information like in the afore-mentioned scenario 2 with the RAP.

The elementary_stream_priority_indicator field may be a 1-bit field and may indicate priority of ES data included in a payload of a corresponding TS packet among TS packets having the same PID. That is, the field may indicate priority of the ES packet. In this regard, when a head segment needs to be aligned with a RAP or a period (a concept such as epoch) of a subtitle itself like in the aforementioned scenario 2, the present field may be set to 1 and may be preferentially processed by a decoder.

The PCR_flag may be a 1-bit flag and may indicate that the adaptation_field includes a PCR field encoded with two parts when a value of the PCR_flag is 1.

The OPCR_flag may be a 1-bit flag and may indicate that the adaptation_field includes an OPCR field encoded to two parts when a value of the OPCR_flag is 1.

The splicing_point_flag may be a 1-bit flag and may indicate that the splice_countdown field is present in the associated adaptation field when a value of the splicing_point_flag is set to 1.

The transport_private_data_flag may be a 1-bit flag and may indicate that the adaptation_field includes one or more private_data bytes when a value of the transport_private_data_flag is set to 1.

The adaptation_field_extension_flag may be a 1-bit flag and may indicate that adaptation field extension is present when a value of the adaptation_field_extension_flag is set to 1.

The program_clock_reference_base field may be a 33-bit field and a value thereof may be given according to PCR_base(i).

The program_clock_reference_extension field may be a 9-bit field and a value thereof may be given according to PCR_ext(i). The program_clock_reference_base field and the program_clock_reference_extension field may be two parts included in the program_clock_reference (PCR) field that is a 42-bit field.

The original_program_clock_reference_base field and the original_program_clock_reference_extension field may be two parts included in the optional original program reference (OPCR) field of 42 bits.

The splice_countdown field may be an 8-bit field and may be represented with a positive or negative value. The positive value may specify the remaining number of TS packets of the same PID prior to a splicing point.

The transport_private_data_length field may be an 8-bit field and may specify the number of private_data bytes subsequent to the transport_private_data_length.

The private_data_byte field may be an 8-bit field.

The adaptation_field_extension_length field may be an 8-bit field and may indicate a byte number of an extended adaptation field subsequent to this field.

The ltw_flag (legal_time_window_flag) may be a 1-bit flag and may indicate that the ltw_offset field is present when a value of the ltw_flag is set to 1.

The piecewise_rate_flag may be a 1-bit flag and may indicate that the piecewise_rate field is present when a value of the piecewise_rate_flag is set to 1.

The seamless_splice_flag may be a 1-bit flag and may indicate that the splice_type field and the DTS_next_AU field are present when a value of the seamless_splice_flag is set to 1.

The ltw_valid_flag (legal time window_valid_flag) may be a 1-bit flag and may indicate that a value of the ltw_offset is valid when a value of the ltw_valid_flag is set to 1.

The ltw_offset (legal time window_offset) field may be a 15-bit field and a value thereof may be defined only when the ltw_valid_flag has a value of 1.

The piecewise_rate field may be a 22-bit field and a value thereof may be defined only when both the ltw_flag and the ltw_valid_flag are set to 1.

The splice_type field may be a 4-bit field and may define the splice_decoding_delay and the max_splice_rate.

The DTS_next_AU (decoding_time_stamp_next_access_unit) field may be a 33-bit field encoded with three parts and may indicate decoding time of a first access unit subsequent to a splicing point.

The stuffing_byte field may be a fixed 8-bit field having a value of '1111 1111' inserted by an encoder.

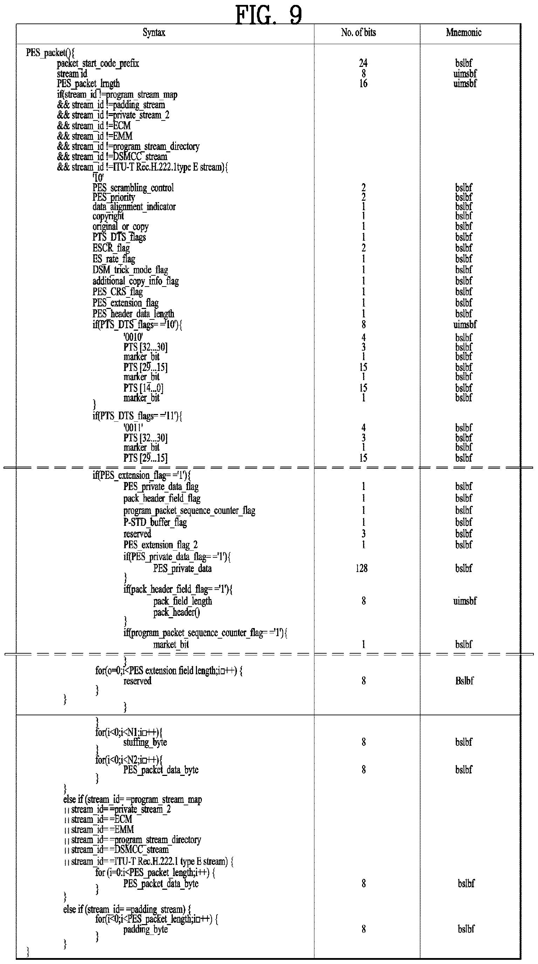

FIG. 9 is a diagram illustrating a configuration of PES_packet according to an embodiment of the present invention. FIG. 9 illustrates some of elements included in the PES_packet, which are associated with the present invention.

The PES_packet field may include a packet_start_code_prefix field, a stream_id field, a PES_packet_length field, a PES_scrambling_control field, a PES_priority field, a data_alignment_indicator, a copyright field, an original_or_copy field, a PTS_DTS_flags, an ESCR_flag, an ES_rate_flag, a DSM_trick_mode_flag, an additional_copy_info_flag, a PES_CRC_flag, a PES_extension_flag, a PES_header_data_length field, a PTS field, a marker_bit, a PES_private_data_flag, a pack_header_field_flag, a program_packet_sequence_counter_flag, a P-STD_buffer_flag, a PES_extension_flag_2, a PES_private_data field, a pack_field_length field, a pack_header() field, a stuffing_byte field, a PES_packet_data_byte field, and/or a padding_byte field.

The packet_start_code_prefix field may be a 24-bit code and may configure a packet start code for identifying the start of a packet together with the following stream_id.

The stream_id field may specify the type and number of elementary steams. That is, the stream_id field may indicate the type of streams transmitted in the PES packet and, in the present invention, an XML-based subtitle may be set to private_stream_1 '1011 1101' or private_stream_2 '1011 1111'.

The PES_packet_length field may be a 16-bit field and may specify the byte number of a PES packet subsequent to the ES_packet_length field.

The PES_scrambling_control field may be a 2-bit field and may indicate a scrambling mode of a PES packet payload.

The PES_priority field may be a 1-bit field and may indicate priority of a payload in a corresponding PES packet.

The data_alignment_indicator may be a 1-bit flag and may indicate that a video syntax element or an audio sync word is subsequent to a corresponding PES packet header when a value of the data_alignment_indicator is set to 1.

The copyright field may be a 1-bit field and may indicate that content of a corresponding PES packet payload is protected by copyright, if it is set to a value of 1.

The original_or_copy field may be a 1-bit field and may indicate that a corresponding PES packet payload is original when a value of the field is set to 1.

The PTS_DTS_flags may be a 2-bit flag and may indicate that a PTS field is present in a PES packet header when a value of the PTS_DTS_flags is set to '10'. When the value is '11', the PTS_DTS_flags may indicate that a PTS field and a DTS field are present in the PES packet header, and when the value is '00', the PTS_DTS_flags may indicate that a PTS field or a DTS field are not present in the PES packet header.

The ESCR_flag may be a 1-bit flag and may indicate that an ESCR base and extension fields are present in a PES packet header when a value of the ESCR_flag is set to 1.

The ES_rate_flag may be a 1-bit flag and may indicate that the ES_rate field is present in a PES packet header when a value of the ES_rate_flag is set to 1.

The DSM_trick_mode_flag may be a 1-bit flag and may indicate that an 8-bit trick mode field is present when a value of the DSM_trick_mode_flag is set to 1.

The additional_copy_info_flag may be a 1-bit flag and may indicate that the additional_copy_info field is present when a value of the additional_copy_info_flag is set to 1.

The PES_CRC_flag may be a 1-bit flag and may indicate that the CRC field is present in a PES packet when a value of the PES_CRC_flag is set to 1.

The PES_extension_flag may be a 1-bit flag and may indicate that an extension field is present in a PES packet header when a value of the PES_extension_flag is set to 1.

The PES_header_data_length field may be an 8-bit field and may specify a total number of stuffing bytes and bytes occupied by an optional field included in a corresponding PES packet header.

The presentation time stamp (PTS) field may indicate presentation time as a 33-bit number encoded with three separated fields. In the present invention, the PTS may be used to synchronize an XML subtitle service with video and audio and use the XML subtitle service. In this case, information about a begin time and an end time within an XML subtitle may be interpreted based on the PTS.

The marker_bit may be a 1-bit field and a value thereof may be set to 1.

The PES_private_data_flag may be a 1-bit flag and may indicate that a PES packet header includes private data when a value of the PES_private_data_flag is set to 1.

The pack_header_field_flag may be a 1-bit flag and may indicate that a PES packet header stores an ISO/IEC 11172-1 pack header or a Program Stream pack header when a value of the pack_header_field_flag is set to 1.

The program_packet_sequence_counter_flag may be a 1-bit flag and may indicate that program_packet_sequence_counter, an MPEG1_MPEG2_identifier, and original_stuff_length fields are present in a corresponding PES packet when a value of the program_packet_sequence_counter_flag is set to 1.

The P-STD_buffer_flag may be a 1-bit flag and may indicate that the P-STD_buffer_scale and the P-STD_buffer_size are present in a corresponding PES packet header.

The PES_extension_flag_2 may be a 1-bit field and may indicate that the PES_extension_field_length field and related fields are present.

The PES_private_data field may be a 16-bit field and may include private data. In the present invention, system_clock_frequency for aligning a time line in an XML subtitle with a time line according to the PTS may be required. In the present invention, although the system_clock_frequency field is defined in the PES_data_field(), the system_clock_frequency field may be defined in the PES header using the PES_private_data field.

The pack_field_length field may be an 8-bit field and may indicate a length of the pack_header_field() in bytes

The stuffing_byte field may have a fixed 8-bit value of '1111 1111' and may be inserted by an encoder.

The PES_packet_data_byte field may include ES data determined by a PID or stream_id of a packet. The PES_packet_data_byte field may define the XML subtitle ES. The PES_data_field() defined in the present invention may be positioned in the PES_packet_data_byte field. The PES_data_field() will be described later in detail.

The padding_byte field may have a fixed 8-bit value of '1111 1111' and may be removed by a decoder.

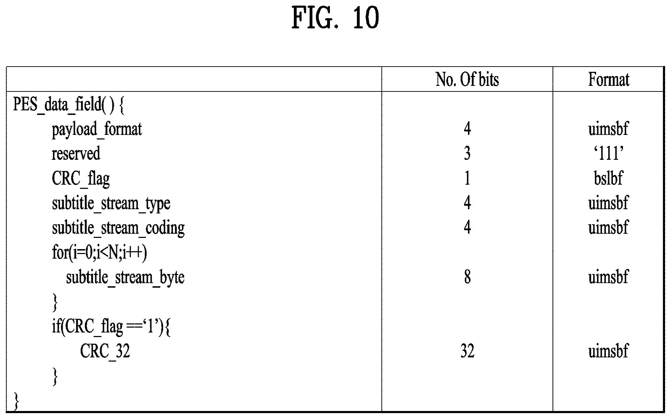

FIG. 10 is a diagram illustrating PES_data_field according to an embodiment of the present invention. The illustrated PES_data_field may include at least one of a payload format field, a CRC flag field, a subtitle stream type field, a subtitle stream coding field, a subtitle stream byte field, and/or a CRC field.

The payload_format field indicates the data type of subtitle_stream_byte included in the PES_data_field. That is, the payload_format field may indicate the format of a subtitle stream. By this field, it may be determined that subtitle_stream_byte is timed text written in XML and, in this case, the field may be set to 0x02.

The subtitle_stream_type field may indicate the profile of timed text written in XML. That is, the subtitle_stream_type field indicates the type of a subtitle stream. In general, an XML-based subtitle is based on W3C TTML. W3C TTML is extended by SMPTE-TT, or used restrictively by W3C IMSC1 and Youview. In some cases, the functions of TTML are selectively used and a necessary element is additionally defined, like EBU-TT, EBU-TT-D, and CFF-TT.

[Table 1]

| subtitle_stream_type value | Meaning |
| --- | --- |
| 0000 | Reserved |
| 0001 | TTML |
| 0010 | SMPTE-TT |
| 0011 | EBU-TT-D |
| 0100 | EBU-TT |
| 0101 | CFF-TT |
| 0110 | Youview |
| 0111 | IMSC1 |
| 1000-1001 | User private |
| 1010-1111 | Reserved for future use |

The subtitle_stream_coding field indicates the coding format of the subtitle_stream_byte field. That is, the subtitle_stream_coding field may indicate the coding format of a subtitle stream. In an embodiment of the subtitle_stream_coding field, it may have the following values. For example, if the corresponding field is set to '0000', timed text data may be included. If the corresponding field is set to '0001', timed text data compressed in gzip may be included. In addition, if the corresponding field is set to '0010', timed text data formatted in an ISO Base Media Field Format (ISOBMFF) may be included.

[Table 2]

| subtitle_stream_coding value | Meaning |
| --- | --- |
| 0000 | uncompressed |
| 0001 | gzip |
| 0010 | ISOBMFF encoding |
| 0011-1111 | Reserved for future use |

The subtitle_stream_byte field includes timed text data written in XML. The subtitle_stream_byte field may include data in a coding format indicated by the subtitle_stream_coding field. An embodiment of the subtitle_stream_byte field will be described in detail with reference to the following figure.

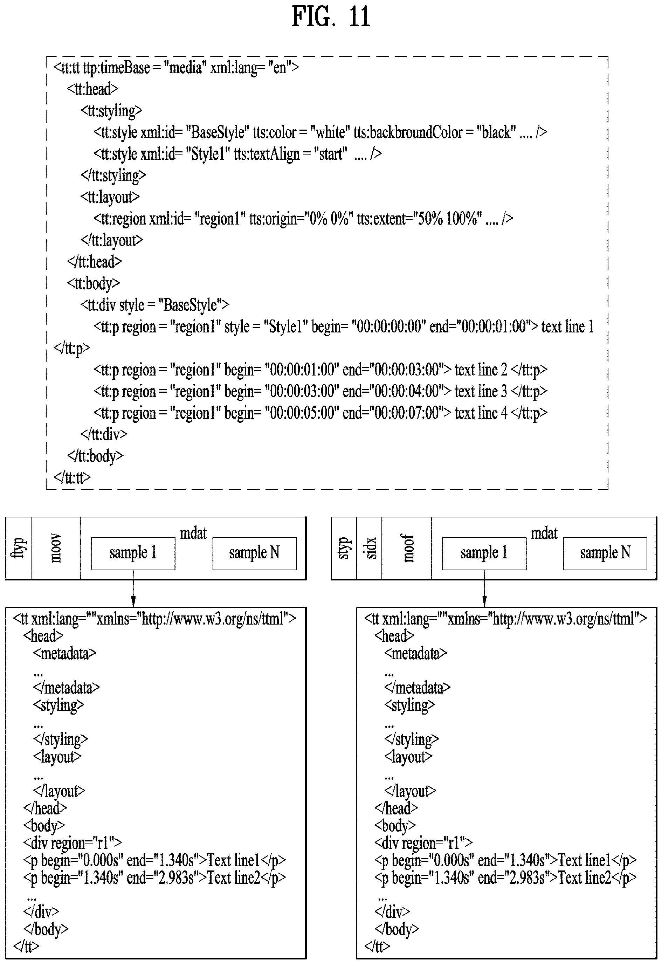

FIG. 11 is a diagram illustrating timed text corresponding to a coding format according to an embodiment of the present invention. That is, subtitle data in a different format according to subtitle_stream_coding may be included in subtitle_stream_byte. For example, if the value of subtitle_stream_coding is '0000', timed text as illustrated in an upper part of FIG. 11 may be included. This may be uncompressed timed text.

In addition, if the value of subtitle_stream_coding is '0010', subtitle_stream_byte may include a set of timed text formatted according to the ISOBMFF rule. In this case, subtitle_stream_byte may include information as illustrated in a lower part of FIG. 11. That is, if the corresponding file is formatted according to the ISOBMFF, the file may include an ftyp box, a moov box, and an mdat box. Among them, the mdat box may include the timed text data. In another embodiment, an ISOBMFF-formatted subtitle file may include a styp box, a sidx box, a moof box, and an mdat box. In this case, the mdat box may also include timed text data.

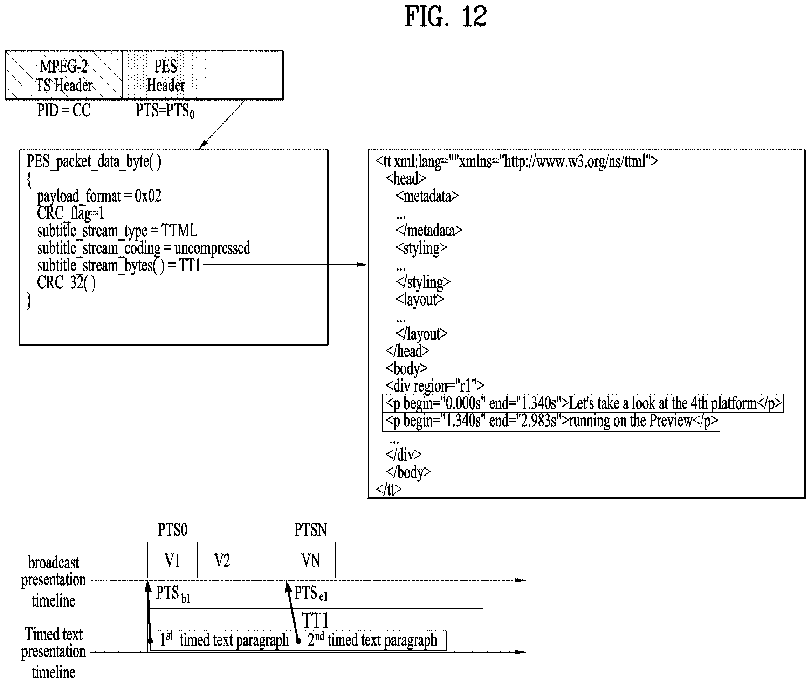

FIG. 12 is a view illustrating an MPEG-2 TS packet including timed text data according to an embodiment of the present invention. As illustrated in FIG. 12, the MPEG-2 TS packet may include an MPEG-2 TS header, a PES header, and payload. A PID included in the MPEG-2 TS header may have a value indicating closed caption (CC), and the PES header may include PTS information having a value of PTS0. Further, the payload part may include PES_packet_data_byte() which may in turn include payload_format, subtitle_stream_type, subtitle_stream_coding, and subtitle_stream_bytes. Herein, payload_format may be set to 0x02, indicating that subtitle data is included in the payload, and subtitle_stream_type may indicate that the type of the included subtitle is TTML. subtitle_stream_coding may be set to uncompressed, indicating that the subtitle data is not compressed. Further, subtitle_stream_bytes may include Timed Text 1 (TT1). Details of TT1 are illustrated in the figure. As illustrated, TT1 may include specific text data and information about the begin time and end time of the data.

A broadcast signal receiver or a subtitle processor may convert the begin and end time information into PTS values, using the play begin and end times of the subtitle included in the above-described timed text, thereby enabling play synchronization between the subtitle and a video/audio.

First, parameters used in equations that convert begin and end time information into PTS values will be described below.

PTS_0 may mean a Presentation Timestamp (PTS) included in a PES packet having timed text.

T_bn may indicate a value in seconds into which the begin attribute of each $n^{th}$ p element in the timed text is converted. This may be information related to the play start of a subtitle included in the $n^{th}$ p element.

T_en may indicate a value in seconds into which the end attribute of each $n^{th}$ p element in the timed text is converted. This may be information related to the play end of the subtitle included in the $n^{th}$ p element.

T_bn and T_en may be calculated by 3600*hours+60*minutes+seconds+((frames+(subFrames/subFrameRate)/effectiveFrameRat e) or ticks/tickRate among values available as begin/end. Herein, the subFrameRate attribute may be used to specify the subframe rate of a related media object. effectiveFrameRate(in frames per second) may be given as frameRate*frameRateMultipler. For example, effectiveFrameRate may indicate 30Hz, 29.97Hz, or the like. tickRate may indicate the number of ticks per second.

PTS_bn may indicate a PTS corresponding to the play begin time of the subtitle included in the $n^{th}$ p element.

PTS_en may indicate a PTS corresponding to the play end time of the subtitle included in the $n^{th}$ p element.

If begin/end is expressed in the form of an offset time, PTSbn and PTSen may be calculated in the following manner.

$$PTS\_bn=PTS\_0+T\_bn*90000$$

$$PTS\_en=PTS\_bn+(T\_en-T\_bn)*90000=PTS0+T\_en*90000$$

That is, the PTS value indicating the play begin time may be given as the sum of a PTS value included in a PES packet and a value in PTS units into which the begin time information of the $n^{th}$ p element in the timed text is converted. Conversion to PTS units may be performed by multiplying time information in seconds by 90000. Likewise, the PTS value indicating the play end time may be given as the sum of the PTS value indicating the play begin time and a value in PTS units into which the difference between the end time in seconds and the begin time in seconds is converted. In addition, the PTS value indicating the play end time may be given as the sum of the PTS value included in the PES packet and the value in PTS units into which the end time in seconds is converted. Conversion to PTS units may be performed by multiplying time information in seconds by 90000.

If begin/end is expressed in the form of a clock time (i.e. when local, gps, or UTC time information is included), PTS_b1, PTS_bn, and PTS_en may be calculated in the following manner. Herein, PTS_b1 is a PTS indicating the play begin time of a subtitle included in a first p element.

$$PTS\_bn=PTS\_0+(T\_bn-T\_b1)*90000$$

$$PTS\_en=PTS\_bn+(T\_en-T\_bn)*90000=PTS\_0+(T\_en-T\_b1)*90000$$

That is, the PTS value indicating the play begin time may be given as the sum of a PTS value included in a PES packet and a value in PTS units into which the difference between the begin time information of the $n^{th}$ p element in the timed text and the begin time information of the first p element is converted. Conversion to PTS units may be performed by multiplying time information in seconds by 90000. Likewise, the PTS value indicating the play end time may be given as the sum of the PTS value indicating the play begin time and a value in PTS units into which the difference between the end time in seconds and the begin time in seconds is converted. In addition, the PTS value indicating the play end time may be given as the sum of the PTS value included in the PES packet and a value in PTS units into which the difference between the end time in seconds and the begin time information of the first p element is converted. Conversion to PTS units may be performed by multiplying time information in seconds by 90000.

As illustrated in a lower part of FIG. 12, the begin and end times in seconds of subtitle data included in the payload of a PES packet may be converted into PTS units, and mapped to a broadcast presentation timeline, thereby supporting play synchronization between the subtitle and an audio/video stream received by broadcasting. That is, timed text received in a PES packet includes time information on a timed text presentation timeline, and the broadcast signal receiver may map the corresponding time information to a broadcast presentation timeline by means of the subtitle processor.

However, if a subtitle included in timed text is synchronized with a video/audio stream included in a broadcast stream according to the above-proposed method, the following may occur.

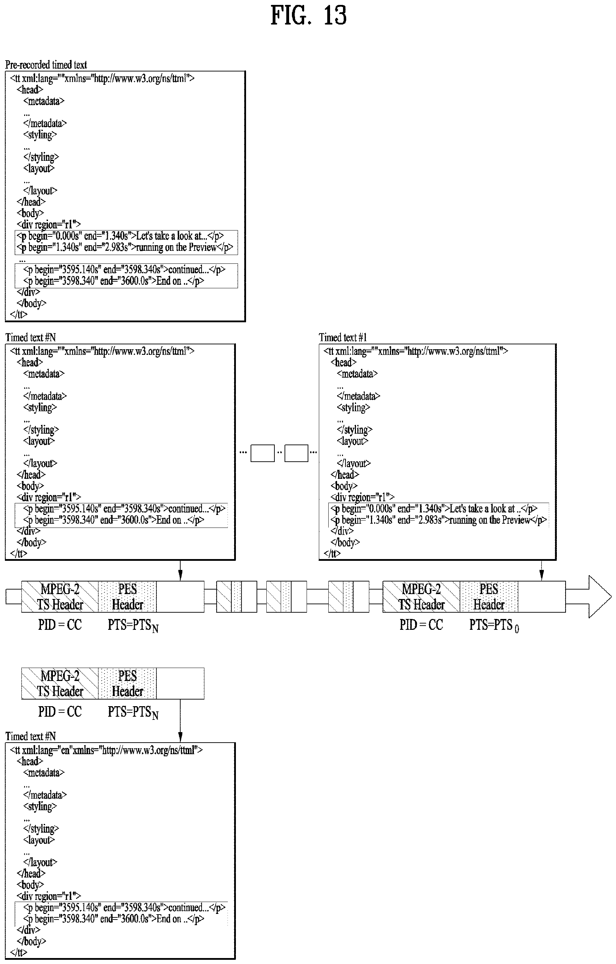

FIG. 13 illustrates a method of transmitting timed text according to an embodiment of the present invention. Subtitle data for a pre-recorded video may be configured as one timed text file as illustrated in an upper part of FIG. 13. If the timed text file is transmitted in a broadcast stream, MPEG-2 TS, it may occur that the begin/end value of each paragraph (p element) in the timed text is just included in a TS packet without being modified. That is, the paragraphs of the single timed text file may be transmitted separately in different packets having different PTSs. As illustrated in FIG 13, pre-recorded timed text may be divided into N timed text data ranging from first to $N^{th}$ time text data, included in N TS packets, and then transmitted.

In this case, the receiver maps the paragraph included in each TS packet to a broadcast timeline, referring to a PTS value included in the PES header of the TS packet, which makes accurate synchronization difficult. In other words, since the paragraphs of the TS packets are synchronized based on the different PTSs of the respective TS packets, instead of one reference point, the paragraphs may not be displayed at time points intended at the time of pre-recording. That is, the paragraphs of timed text included in the first TS packet may be mapped based on PTS_0, and the paragraphs of timed text included in the $N^{th}$ TS packet may be mapped based on PTS_N.

As a result, the receiver may map the play begin and end times of each paragraph in the received timed text to wrong play begin and end times. A lower part of FIG. 13 illustrates an example of receiving a TS packet including $N^{th}$ timed text data at a subtitle processor of a broadcast signal receiver. Herein, the timed text includes information about play begin and end times in the form of offsets. Since the PES header of the TS packet includes PTS_N, the play begin and end times of the timed text may be mapped based on PTS_N. For accurate synchronization, the play begin time (PTS_b1) of the first paragraph of the $N^{th}$ timed text should be PTS_N, and the play end time (PTS_e1) of the first paragraph of the $N^{th}$ timed text should be PTS_N+3.2*90000. Herein, 3.2 may result from calculation of the difference between begin information 3595.140 and end information 3598.340.

However, the receiver may estimate the play begin time (PTS_b1) of the first paragraph to be PTSN+3595.140*90000 and the play end time (PTS_e1) of the first paragraph to be PTS_N+3598.340*90000, and thus begin and end playing at the estimated time points. As a result, some problem may occur to synchronization between a subtitle and a video of a broadcast stream. Accordingly, there is a need for mapping by correcting time information of timed text based on the PTS value of a TS packet including the timed text.

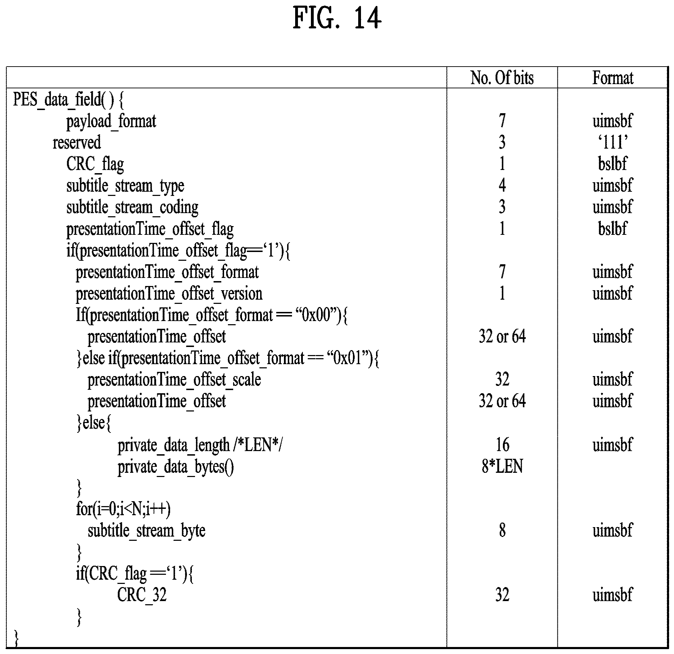

FIG. 14 illustrates a PES data field including subtitle data according to an embodiment of the present invention. To solve the afore-described synchronization error, PES_data_field() may be included and transmitted in PES_packet_data_byte of a PES packet in the present invention, as illustrated in FIG. 14. PES_data_field() may include at least one of payload_format, subtitle_stream_type, subtitle_stream_coding, presentationTime_offset_flag, presentationTime_offset_format, presentationTime_offset_version, presentationTime offset, presentationTime_offset_scale, private_data_length, private_data_bytes, and/or subtitle_stream_bytes.

payload_format may indicate the format of the payload of a PES included in a TS packet. In the present invention, payload_format may indicate that subtitle data is included in the payload. subtitle_stream_type may indicate the type of the included subtitle. subtitle_stream_coding may indicate the coding format of subtitle_stream_bytes.

presentationTime_offset_flag may indicate whether offset information for the presentation time of a subtitle included in the following subtitle_stream_byte is included or not.

presentationTime_offset_version may indicate information about the version of the offset for the presentation time of the subtitle included in following subtitle_stream_bytes. If presentationTime_offset_version is set to 0, presentationTime_offset may be represented in 32 bits, and if presentationTime_offset_version is set to 1, presentationTime_offset may be represented in 64 bits.

presentationTime_offset_format may indicate a format in which the offset for the presentation time of the subtitle included in subtitle_stream_byte is represented, including Network Time Protocol (NTP) and Precision Time Protocol (PTP). In an embodiment, 0x00 may represent an offset in seconds for the presentation time of the subtitle included in subtitle_stream_byte, including an offset being a value below the decimal point. In addition, 0x01 may represent an offset on a per-second time scale for the presentation time of the subtitle included in subtitle_stream_byte. If 0x01 also represents an offset in seconds for the presentation time of the subtitle included in subtitle_stream_byte, formats such as NTP and PTP may be indicated.

presentationTime_offset_scale may indicate an available time scale in representing an offset for the presentation time of the subtitle included in subtitle_stream_byte. For example, the time scale may be represented as the number of ticks per second.

presentationTime_offset may indicate the offset for the presentation time of the subtitle included in subtitle_stream_byte. For example, if presentationTime_offset_format is set to 0x00, the offset may be given as 3600*hours+60*minutes+seconds+((frames+(subFrames/subFrameRate)/effectiveFrameRat e). Herein, subFrameRate may be used to specify the subframe rate of a related media object. In addition, effectiveFrameRate may be represented in frames per second and given as frameRate*frameRateMultipler. For example, effectiveFrameRate may indicate 30Hz, 29.97Hz, or the like. If presentationTime_offset_format is set to 0x01, an offset may be presented on the time scale indicated by presentationTime_offset_scale. The offset may be expressed in 32 or 64 bits according to the value of presentationTime_offset_version.

private_data_length may indicate the byte length of the following private_data_bytes().

private_data_bytes() may be defined privately to a length indicated by private_data_length or may include contents to be extended later.

subtitle_stream_byte may include specific text data and information about the begin and end times of the data.

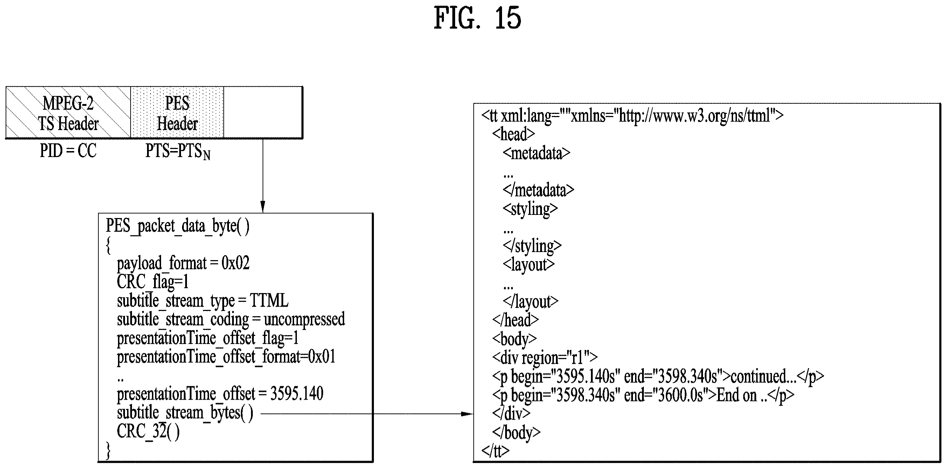

FIG. 15 is a diagram illustrating a method for transmitting subtitle data by use of offset information according to an embodiment of the present invention. As illustrated in FIG. 15, an MPEG-2 TS packet may include an MPEG-2 TS header, a PES header, and payload. A PID included in the MPEG-2 TS header may have a value indicating closed caption (CC), and the PES header may include PTS information having a value of PTS_N. In addition, the payload part may include PES_packet_data_byte() which may in turn include payload_format, subtitle_stream_type, subtitle_stream_coding, presentationTime_offset_flag, presentationTime_offset_format, presentationTime_offset, and subtitle_stream_bytes. Herein, payload_format may be set to 0x02 to indicate that subtitle data is included in the payload, subtitle_stream_type may indicate that the type of the included subtitle is TTML, and subtitle_stream_coding may be set to uncompressed to indicate that the subtitle data is not compressed. In addition, presentationTime_offset_flag may be set to 1 to indicate that offset information is included. presentationTime_offset_format may be set to 0x01 to indicate that an offset is represented based on a per-second time scale. Further, presentationTime_offset may be set to 3595.140, indicating an offset for the following subtitle_stream_bytes.

The receiver may convert begin and end time information about a subtitle included in timed text into PTS values, thereby enabling play synchronization between the subtitle and a video/audio. Parameters used in converting time information into a PTS value will be defined as follows.

PTS_0 may mean a Presentation Timestamp (PTS) included in a PES packet with timed text.

T_bn may indicate a value in seconds into which the begin attribute of each $n^{th}$ p element in the timed text is converted. This may be information related to the play start of a subtitle included in the $n^{th}$ p element.

T_en may indicate a value in seconds into which the end attribute of each $n^{th}$ p element in the timed text is converted. This may be information related to the play end of the subtitle included in the $n^{th}$ p element.

T_bn and T_en may be calculated by 3600*hours+60*minutes+seconds+((frames+(subFrames/subFrameRate)/effectiveFrameRat e) or ticks/tickRate among values available as begin/end. Herein, the subFrameRate attribute may be used to specify the subframe rate of a related media object. effectiveFrameRate(in frames per second) may be given as frameRate*frameRateMultipler. For example, effectiveFrameRate may indicate 30Hz, 29.97Hz, or the like. tickRate may indicate the number of ticks per second.

PTO may indicate, if an offset for a presentation time is included in PES_packet_data_byte, the offset. The broadcast signal receiver may derive an offset for the presentation time of a subtitle included in subtitle_stream_byte, using the offset. For example, if the offset for the presentation time is represented in seconds, the PTO may be equal to the value of presentationTime_offset. If the offset for the presentation time of the subtitle included in subtitle_stream_byte is represented on a per-second time scale in PES_packet_data_byte, the PTO may be equal to presentationTime_offset/presentationTime_offset_scale.

PTS_bn may indicate a PTS corresponding to the play begin time of the subtitle included in the $n^{th}$ p element.

PTS_en may indicate a PTS corresponding to the play end time of the subtitle included in the $n^{th}$ p element.

If begin/end is expressed in the form of an offset time, PTS_bn and PTS_en may be calculated in the following manner.

$$PTS\_bn = PTS\_N + (T\_bn - PTO) * 90000$$

$$PTS\_en = PTS\_bn + (T\_en - T\_bn) * 90000 = PTS\_N + (T\_en - PTO) * 90000$$

That is, the PTS value indicating the play begin time may be given as the sum of a PTS value (PTS_N) included in a PES packet and a value in PTS units into which the difference between the offset (PTO) and the begin time information (T_bn) of the $n^{th}$ p element in the timed text is converted. Conversion to PTS units may be performed by multiplying time information in seconds by 90000. Likewise, the PTS value indicating the play end time may be given as the sum of the PTS value (PTS_bn) indicating the play begin time and a value in PTS units into which the difference between the end time in seconds (T_en) and the begin time in seconds (T_bn) is converted. In addition, the PTS value (PTS_en) indicating the play end time may be given as the sum of the PTS value (PTS_N) included in the PES packet and a value in PTS units into which the difference between the end time in seconds (T_en) and the offset (PTO) is converted. Conversion to PTS units may be performed by multiplying time information in seconds by 90000.

If begin/end is expressed in the form of a clock time (i.e. when local, gps, or UTC time information is included), PTS_b1, PTS_bn, and PTS_en may be calculated in the following manner. Herein, PTS_b1 is a PTS indicating the play begin time of a subtitle included in a first p element.

$$PTS\_bn=PTS\_N+(T\_bn-T\_b1-PTO)*90000$$

$$PTS\_en=PTS\_bn+(T\_en-T\_bn)*90000=PTS\_N+(T\_en-T\_b1-PTO)*90000$$

That is, the PTS value (PTS_bn) indicating the play begin time may be given as the sum of a PTS value (PTS_N) included in a PES packet and a value in PTS units into which begin time information to which the offset is applied is converted. The begin time information to which the offset is applied may be represented as a value obtained by subtracting the begin time information (T_b1) of the first p element and then the offset (PTO) from the begin time information (T_bn) of the $n^{th}$ p element included in the timed text. Conversion to PTS units may be performed by multiplying time information in seconds by 90000.

Likewise, the PTS value indicating the play end time may be given as the sum of the PTS value (PTS_bn) indicating the play begin time and a value in PTS units into which the difference between the end time in seconds (T_en) and the begin time in seconds (T_bn) is converted. In addition, the PTS value (PTS_en) indicating the play end time may be given as the sum of the PTS value (PTS_N) included in the PES packet and a value in PTS units into which the end time information to which the offset is applied is converted. The end time information to which the offset is applied may be represented as a value obtained by subtracting the start time information (T_b1) of the first p element and then the offset (PTO) from the end time information (T_en) of the $n^{th}$ p element included in the timed text. Conversion to PTS units may be performed by multiplying time information in seconds by 90000.

For example, as illustrated in FIG. 15, a PTO included in PES_packet_data_byte included in a TS packet may indicate 3595.140. In addition, the begin time T_b1 of the first p element included in subtitle_stream_bytes may have a value of 3595.140, and the end time T_e1 of the first p element may have a value of 3598.340. In this case, the play begin time (PTS_b1) of the first p element (paragraph) is PTS_N+(3595.140-3595.140)*90000, and the play end time (PTS_e1) of the first p element (paragraph) is PTS_N+(3598.340-3595.140)*90000=PTS_N+3.2*90000, according to the above equations.

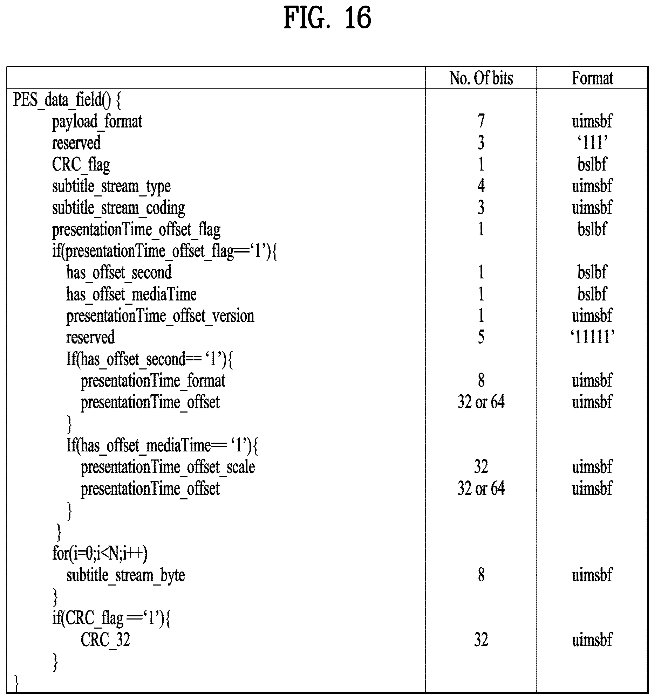

FIG. 16 illustrates a PES data field including subtitle data according to an embodiment of the present invention. To solve the afore-described synchronization error, PES_data_field() may be included and transmitted in PES_packet_data_byte of a PES packet in the present invention, as illustrated in FIG. 16. PES_data_field() may include at least one of payload_format, subtitle_stream_type, subtitle_stream_coding, presentationTime_offset_flag, has_offset_second, has_offset_mediaTime, presentationTime_offset_version, presentationTime offset, presentationTime_offset_scale, and/or subtitle_stream_bytes().

payload_format may indicate the format of the payload of a PES included in a TS packet. In the present invention, payload_format may indicate that subtitle data is included in payload. subtitle_stream_type may indicate the type of the included subtitle. subtitle_stream_coding may indicate the coding format of the subtitle data.

presentationTime_offset_flag may indicate whether offset information for the presentation time of a subtitle included in the following subtitle_stream_byte is included or not.

has_offset_second may indicate whether an offset in seconds for the presentation time of the subtitle included in subtitle_stream_byte is included or not.

has_offset_mediaTime may indicate whether an offset based on a per-second time scale for the presentation time of the subtitle included in subtitle_stream_byte is included or not.

presentationTime_offset_version may indicate information about the version of the offset for the presentation time of the subtitle included in the following subtitle_stream_byte. If presentationTime_offset_version is set to 0, presentationTime_offset may be represented in 32 bits, and if presentationTime_offset_version is set to 1, presentationTime_offset may be represented in 64 bits.

presentationTime_offset_format may indicate a format in which the offset for the presentation time of the subtitle included in subtitle_stream_byte is represented, including Network Time Protocol (NTP) and Precision Time Protocol (PTP). In an embodiment, 0x00 may represent an offset in seconds for the presentation time of the subtitle included in subtitle_stream_byte, including an offset being a value below the decimal point. presentationTime_offset_scale may indicate an available time scale in representing an offset for the presentation time of the subtitle included in subtitle_stream_byte. For example, the time scale may be represented as the number of ticks per second.

presentationTime_offset may indicate the offset for the presentation time of the subtitle included in subtitle_stream_byte. For example, if has_offset_second is set to 1, the offset may be given as 3600*hours+60*minutes+seconds+((frames+(subFrames/subFrameRate)/effectiveFrameRat e). Herein, subFrameRate may be used to specify the subframe rate of a related media object. In addition, effectiveFrameRate may be represented in frames per second and given as frameRate*frameRateMultipler. For example, effectiveFrameRate may indicate 30Hz, 29.97Hz, or the like. If has_offset_mediaTime is set to 1, an offset may be presented on the time scale indicated by presentationTime_offset_scale.

The offset may be expressed in 32 or 64 bits according to the value of presentationTime_offset_version.

subtitle_stream_byte may include specific text data and information about the begin and end times of the data.

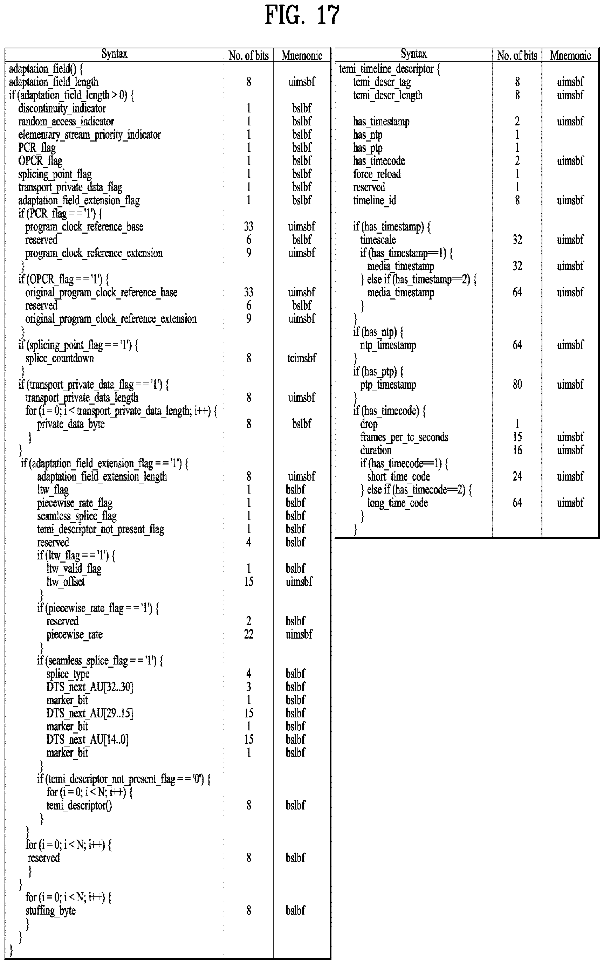

FIG. 17 illustrates an adaptation field including subtitle-related information according to an embodiment of the present invention. If adaptation_field_extension_flag is set to 1 and temi_descriptor_not_present_flag is 1 in the adaptation field of an MPEG-2 TS including timed text, the adaptation field may include temi_descriptor. For example, temi_timeline_descriptor() may be included, as illustrated in FIG. 17.

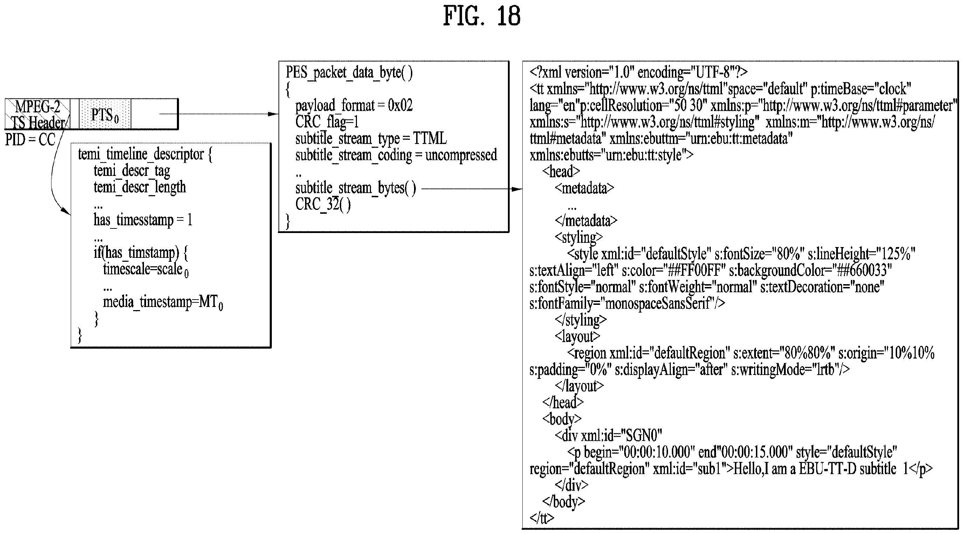

FIG. 18 is a diagram illustrating a method of signaling a timeline according to an embodiment of the present invention. As described above, the adaptation field of a header of an MPEG-2 TS may include temi_timeline_descriptor(). In addition, a PES header may include PTS_0. temi_timeline_descriptor() may signal a timeline to which PTS_0 is mapped. For example, it may be signaled that a media time to which PTS_0 is mapped is MT_0, as illustrated in FIG. 18. temi_timeline_descriptor() may further include timeline identification information and time scale information. In this case, the play begin and end times of each paragraph in timed text included PES_packet_data_byte() may be converted into PTSs of a broadcast stream in the following manner.

In the following equations, T_mt may indicate a timestamp value in seconds calculated using information included in temi_timeline_descriptor(). As illustrated in FIG. 18, if the time scale information has a value of scale_0, and media timestamp information has a value of MT_0, T_mt may be calculated to be MT_0/scale_0.

In a first embodiment, in the presence of presentation time offset information in PES_packet_data_bytes(), PTS_bn and PTS_en may be obtained by the following equations.

$$PTS\_bn=PTS\_0+(T\_bn-T\_mt-PTO)*90000$$

$$PTS\_en=PTS\_bn+(T\_en-T\_bn)*90000=PTS\_0+(T\_en-T\_mt-PTO)*90000$$

The PTS value (PTS_bn) indicating the play begin time may be calculated by adding a value in PTS units into which begin time information to which an offset and a media timestamp are applied is converted to a PTS value (PTS_0) included in a PES packet. The begin time information to which the offset and the media timestamp are applied may be represented as a value calculated by subtracting the media timestamp in seconds (T_mt) and then the offset (PTO) from the begin time information (T_bn) of an $n^{th}$ p element included in timed text. Herein, conversion to PTS units may be performed by multiplying time information in seconds by 90000.

In addition, the PTS value indicating the play end time may be calculated by adding a value in PTS units into which the difference between the end time in seconds (T_en) and the begin time in seconds (T_bn) is converted to the PTS value (PTS_bn) indicating the play begin time. In addition, the PTS value (PTS_en) indicating the play end time may be calculated by adding a value into which end time information to which the offset and the media timestamp are applied is converted to the PTS value (PTS_0) included in the PES packet. The end time information to which the offset and the media timestamp are applied may be represented as a value calculated by subtracting the media timestamp in seconds (T_mt) and then the offset (PTO) from the end time information (T_en) of the $n^{th}$ p element included in the timed text. Herein, conversion to PTS units may be performed by multiplying time information in seconds by 90000.

In a second embodiment, in the absence of presentation time offset information in PES_packet_data_bytes(), PTS_bn and PTS_en may be obtained by the following equations.

$$PTS\_bn=PTS\_0+(T\_bn-T\_mt)*90000$$

$$PTS\_en=PTS\_bn+(T\_en-T\_bn)*90000=PTS\_0+(T\_en-T\_mt)*90000$$

The PTS value (PTS_bn) indicating the play begin time may be calculated by adding a value in PTS units into which begin time information to which a media timestamp is applied is converted to a PTS value (PTS_0) included in a PES packet. The begin time information to which the media timestamp is applied may be represented as a value calculated by subtracting the media timestamp in seconds (T_mt) from the begin time information (T_bn) of an $n^{th}$ p element included in timed text. Herein, conversion to PTS units may be performed by multiplying time information in seconds by 90000.

In addition, the PTS value indicating the play end time may be calculated by adding a value in PTS units into which the difference between the end time in seconds (T_en) and the begin time in seconds (T_bn) is converted to the PTS value (PTS_bn) indicating the play begin time. In addition, the PTS value (PTS_en) indicating the play end time may be calculated by adding a value into which end time information to which the media timestamp is applied is converted to the PTS value (PTS_0) included in the PES packet. The end time information to which the media timestamp is applied may be represented as a value calculated by subtracting the media timestamp in seconds (T_mt) from the end time information (T_en) of the $n^{th}$ p element included in the timed text. Herein, conversion to PTS units may be performed by multiplying time information in seconds by 90000.

FIG. 13 is a diagram illustrating a method of applying an XML subtitle to a DVB subtitle service according to an embodiment of the present invention. FIG. 13 is a diagram illustrating a Service Description Table (SDT) of a DVB system.

The SDT according to an embodiment of the present invention may include a table_id field, a section_syntax_indicator field, a section_length field, a transport_stream_id field, a version_number field, a current_next_indicator field, a section_number field, a last_section_number field, an original_network_id field, a service_id field, an EIT_schedule_flag field, an EIT_present_following_flag field, a running_status field, a free_CA_mode field, a descriptors_loop_length field, a descriptor(), and/or a CRC_32 field.

The table_id field may identify a type of a table. The table_id field may indicate that a corresponding table section is a section for configuring the SDT.

The section_syntax_indicator field may indicate a format of a table section subsequent to a corresponding field. When a value of the corresponding field is 0, the corresponding table section is a short format. When a value of the corresponding field is 1, the corresponding table section complies with a general long format.

The section_length field may indicate a length of a corresponding table section. The section_length field may indicate a length to the end of the corresponding table section from a corresponding field.

The transport_stream_id field may identify a transport stream (TS) to be described in a corresponding table.

The version_number field may indicate a version number of a private table section. A receiver may search for a most recent table section among table sections stored in a memory using the corresponding field and the current_next_indicator field to be described below.

The current_next_indicator field may indicate that a currently transmitted table is valid when a value indicated by the field is 1 and the field may indicate that a currently transmitted table is not valid and is supposed to be valid when the value is 0.

The section_number field may indicate an order of a corresponding section of a corresponding table.

The last_section_number field may indicate an order of a last section among sections included in a corresponding table.

The original_network_id field may identify a first broadcaster that transmits a service described in a corresponding table.

The service_id field may identify each service present in a transport stream. The service_id field may have the same function as the program_number field in a PMT to be described below.

The EIT_schedule_flag field may indicate that an EIT schedule flag for a service is present in a current TS when a value of the field is 1 and the field may indicate that the EIT schedule flag is not present when the value is 0.

The EIT_present_following_flag field may indicate that EIT_present_following information for a service is present in a current TS when a value of the field is 1 and the field may indicate that the EIT_present_following information is not present when the value is 0.

The running_status field may indicate a state of a service. For example, the running_status field may indicate that a service is "not running" when a value of the field is 1, the field may indicate that the service is "starts in a few seconds" when the value is 2, the field may indicate that the service is "pausing" when the value is 3, the field may indicate "running" when the value is 4, and the field may indicate "service off-air" when the value is 5.

The free_CA_mode field may indicate that component streams for configuration of a service are not scrambled when a value of the field is 0 and the field may indicate that access to one or more streams is adjusted by a CA system when the value of the field is 1. The CA system may be an abbreviation of a Conditional Access System and may refer to a system that provides an encryption function of broadcast content and a function of decoding and watching broadcast content by only a contractor in order to limit broadcast viewing to the contractor.

The descriptors_loop_length field may indicate a value obtained by summing lengths of descriptors subsequent to a corresponding field.

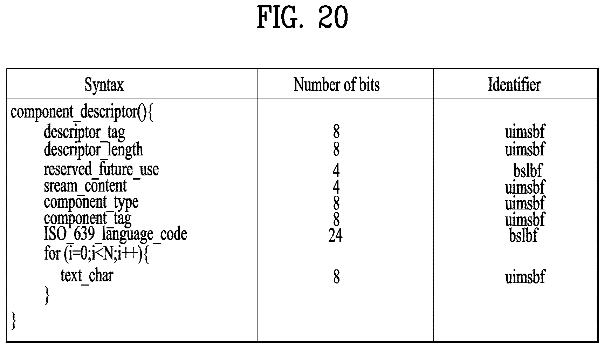

The descriptor() may refer to a descriptor described with respect to each service. According to an embodiment of the present invention, the component_descriptor may be included in the aforementioned descriptor(). The component_descriptor will be described below in detail with reference to FIG. 20.

The CRC_32 field may indicate a CRC value used to check whether error is present in a corresponding table section.

FIG. 20 is a diagram illustrating a configuration of a component_descriptor according to an embodiment of the present invention. The component_descriptor may include a descriptor_tag field, a descriptor_length field, a reserved_future_use field, a stream_content field, a component_type field, a component_tag field, an ISO_639_language_code field, a Number_of_language_minus1 field, and/or a text_char field.

The descriptor_tag field may identify each descriptor.

The descriptor_length field may specify a byte number of a descriptor subsequent to the descriptor_length field.

The reserved_future_use field may be defined or replaced with a Number_of_language_minus1 field in a Subtitling system according to the present invention. The Number_of_language_minus1 field may be a field that is newly defined by replacing the existing reserved_future_use field according to the present invention. A value obtained by adding 1 to a value of the Number_of_language_minus1 may indicate the number of languages supported by a subtitle. The reserved_future_use field may have a value equal to or greater than 0 and may be used to determine Number_of_language_minus1 *3 with respect to N that refers to a repetition number of times of for loop below.

The stream_content field may indicate a type of a stream. In the case of the DVB subtitle, the field may have a value of 0x03.

The component_type field may indicate detailed information of a stream with respect to the stream-type. 0x04 may be allocated to the field to indicate an XML subtitle.

The component_tag may have the same value as the component_tag field in the stream identifier descriptor for a component stream.

The ISO_639_language_code field may be a 24-bit code for representing three texts. A language of an XML subtitle may be represented using the field.

The text_char field may contain a text for describing a component and perform the same function as the ISO_639_language_code by collecting three text_char in the subtitling system. When two or more languages are supported, the field may have N=Number_of_language_minus1 *3.

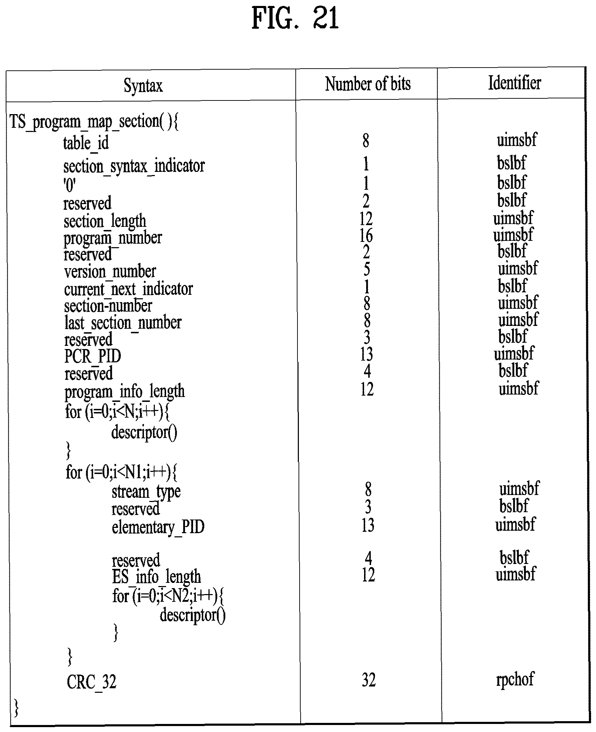

FIG. 21 is a diagram illustrating a method of applying an XML subtitle to a DVB subtitle service according to an embodiment of the present invention. FIG. 21 is a diagram illustrating a configuration of a Program Map Table (PMT). The PMT may be a table for providing mapping between a program number and a program element. In order to provide a subtitle service, subtitling_descriptor may be transmitted in the PMT.

The PMT may include a table_id field, a section_syntax_indicator field, a section_length field, a program_number field, a version_number field, a current_next_indicator field, a section_number field, a last_section_number field, a PCR_PID field, a program_info_length field, a stream_type field, an elementary_PID field, an ES_info_length field, a descriptor, and/or a CRC_32 field.

The table_id field may be an 8-bit field and the TS_program_map_section may be set to a value of 0x02.

The section_syntax_indicator field may be configured with 1 bit and may be set to 1.

The section_length field may be configured with 12 bits and first two bits of the field may be 00. The field may indicate a byte number of a section and indicate a length to CRC from the field. A value of the field may not exceed 1021.

The program_number field may be configured with 16 bits. The field may indicate a program to be applicable to the program_map_PID. Definition of one program may be transmitted by only one TS_program_map_section, which implies that program definition cannot exceed 1016.

The version_number field may be a 5-bit field and may indicate a version of the TS_program_map section. A value of the TS_program_map section may be increased on a one-by-one basis whenever the TS_program_map section is changed. When the version value reaches 31, a next version value may be 0.

The current_next_indicator field may be a 1-bit field and a value of the field may be set to 1 when the TS_program_map section is currently applicable. When the value is set to 0, the section is not applicable yet and the TS_program_map section is valid.

A value of the section_number field may be set to 0x00.

A value of the last_section_number field may be set to 0x00.

The PCR_PID field may be a 13-bit field and may refer to a PID of a TS packet including a valid PCR field for a program specified by a program number.

The program_info_length field may be a 12-bit field and first two bits of the field may have a value of 00. The remaining 10 bits may indicate a byte number of descriptors subsequent to the field.

The stream_type field may be an 8-bit field and may specify a type of a program element transmitted by a packet having a PID value specified by the elementary_PID.

The elementary_PID field may be a 13-bit field and may specify a PID of TS packets including a related program element.

The ES_info_length field may be a 12-bit field and first two bits of the field may be 00. The remaining 10 bits may specify a byte number of descriptors of a related program element subsequent to the field.

The descriptor may include the subtitling_descriptor according to the present invention, which will be described in detail with reference to FIG. 16.

The CRC_32 field may be a 32-bit field and may include a CRC value for acquisition of zero output of registers in a decoder.

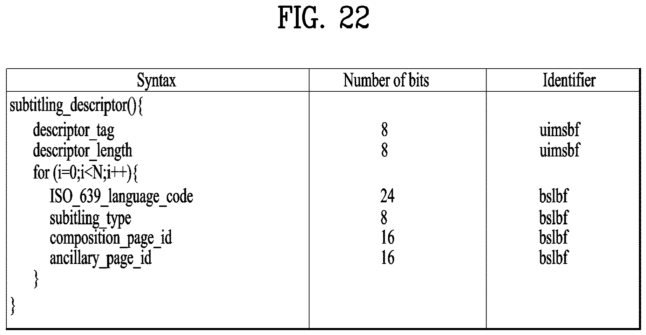

FIG. 22 is a diagram illustrating a configuration of subtitling_descriptor according to an embodiment of the present invention. As a method of transmitting service information of an XML-based subtitle, subtitling_descriptor that has been used in the existing DVB subtitle service may be used. In this case, when multiple languages are supported, the subtitling_descriptor may indicate a language of a subtitle through ISO_639_language_code and may be transmitted while a head and a body of an actually transmitted XML subtitle simultaneously contain elements of various languages. That is, multiple languages may be simultaneously contained in an ES, which may be embodied by outputting a language selected by an XML parser. The subtitling_descriptor may include a descriptor_tag field, a descriptor_length field, an ISO_639_language_code field, a subtitling_type field, a Compositon_page_id field, and/or an ancillar_page_id field.

The descriptor_tag field may be used to identify each descriptor.

The descriptor_length field may specify a byte number of a descriptor subsequent to the descriptor_length field.

The ISO_639_language_code field may be a 24-bit code indicating a language of a subtitle. A language of an XML subtitle may be represented using the field. When multiple languages are represented, the ISO_639_language_code field may indicate only a representative language or may indicate all of the multiple languages.

The subtitling_type field may be set to have the same value as the component_type described with reference to FIG. 14 when stream content indicates a subtitle.

In this case, the Compositon_page_id and the ancillar_page_id may not be used.

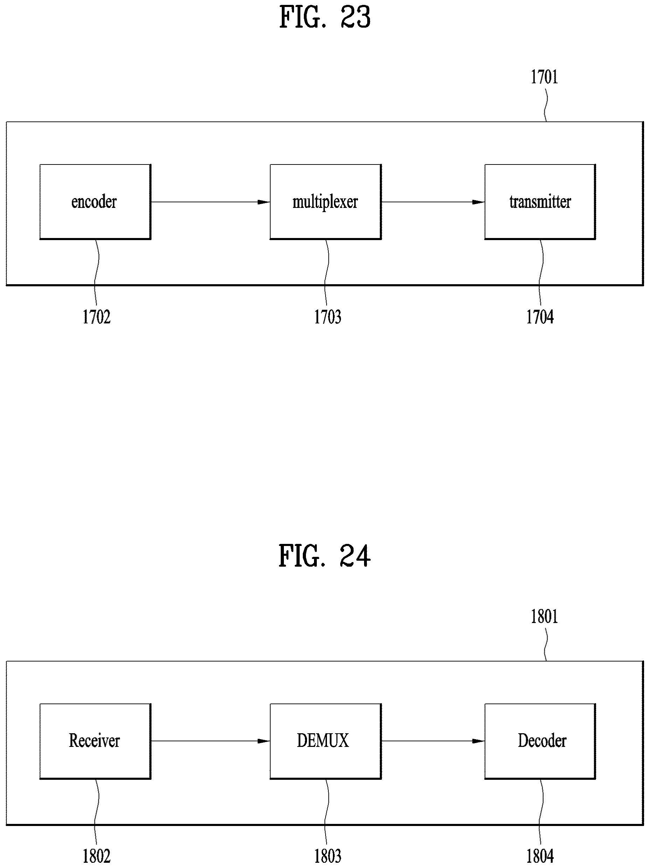

FIG. 23 is a block diagram illustrating a broadcasting transmitter 1701 according to an embodiment of the present invention. The broadcasting transmitter 1701 according to the present invention may include an encoder 1702, a multiplexer (MUX) 1703, and/or a transmitter 1704.

The encoder 1702 may receive video data with a resolution of UHD, HD, or SD, and encode the video data, to generate a video stream. Here, the video stream may be encoded according to High Efficiency Video Coding (HEVC). The video stream may refer to a video elementary stream (ES) or a video packetized elementary stream (PES) formed by packetizing a video ES.

The encoded video stream may be input to the MUX 1703 together with the XML subtitle stream. The method of configuring an XML subtitle stream has been described above with reference to FIGS. 2 to 5 according to scenarios. That is, scenario 1 as a method of using the same ES to transmit a head and a body of XML subtitle data has been described above with reference to FIG. 2, and scenario 1 as a method of dividing subtitle data and transmitting in each ES according to a presentation time has been described above with reference to FIG. 3. In addition, scenario 2 as a method of separately transmitting a head and a body of XML subtitle data has been described above with reference to FIG. 4, and scenario 2 as a method of separately transmitting a body of subtitle data in respective ESs according to presentation times has been described above with reference to FIG. 5.

The video stream output from the encoder 1702 may be input to the MUX 1703 together with a subtitle stream into which subtitle data is converted. The MUX 1703 may multiplex the encoded video stream and subtitle stream to generate a transport stream (TS). Here, the subtitle stream may be an XML subtitle stream. A procedure of generating a TS including a subtitle stream has been described above with reference to FIGS. 12 to 16.

As described above, the video stream and the XML subtitle stream may be synchronized with each other using PTS information. The PTS of the XML subtitle stream may be set based on begin time information, end time information, offset information, and media timestamp information about each p element included in a subtitle as described with reference to FIGS. 14, 15 and 16.

The transmitter 1704 may transmit the transport stream output from the MUX 1703 as a broadcast signal. Here, the transport stream may be channel-coded, modulated, and then transmitted as a broadcast signal.

FIG. 24 is a block diagram illustrating a broadcasting receiver according to an embodiment of the present invention. A broadcasting receiver 1801 according to the present invention may include a receiver 1802, a DEMUX 1803, and/or a decoder 1804.

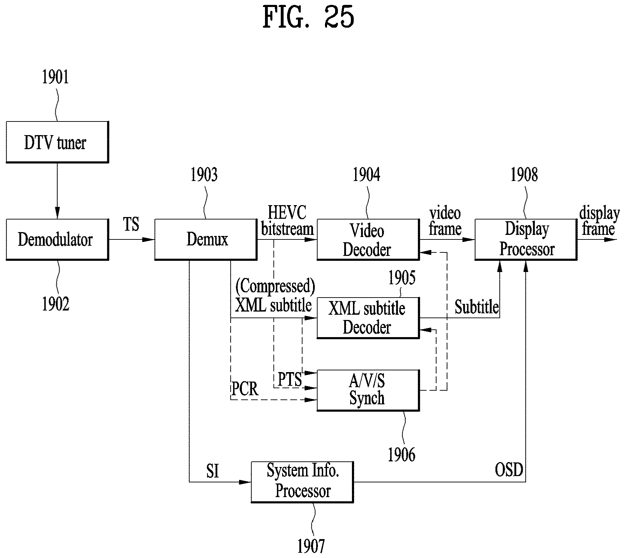

The receiver 1802 may demodulate and then channel-decode a received broadcast signal. The channel-decoded broadcast signal may be input to the DEMUX 1803 and may be demultiplexed into a video stream and a subtitle stream. The output of the DEMUX 1803 may be input to the decoder 1804 and may be divided into video data and subtitle data. That is, the video stream and the subtitle stream may be decoded by a video decoder and a subtitle decoder, respectively, and output as video data and subtitle data, respectively. The video data and the subtitle data may be synchronized and displayed by the receiver. The broadcasting receiver according to an embodiment of the present invention will be described in detail with reference to FIG. 25.

FIG. 25 is a diagram illustrating a detailed configuration of the broadcasting receiver according to an embodiment of the present invention. The broadcasting receiver may include at least one of a receiver (DTV tuner) 1901, a demodulator 1902, a DEMUX 1903, a video decoder 1904, an XML subtitle decoder 1905, an audio video subtitle synchronizer (A/V/S sync) 1906, a system information (SI) processor 1907, and/or a display processor 1908.

The receiver 1901 may receive a broadcast signal transmitted by a transmitter. The received broadcast signal may be input to the demodulator 1902.

The demodulator 1902 may demodulate the broadcast signal and output a transport stream (TS). The TS may be input to the DEMUX 1903 and demultiplexed. The demultiplexed TS may include an HEVC bitstream, an XML subtitle, and system information (SI). Here, the XML subtitle may be packetized or compressed.

The video decoder 1904 may receive and decode the HEVC bitstream to output a video frame.

The XML subtitle decoder 1905 may receive the XML subtitle and extract a subtitle. A detailed configuration of the XML subtitle decoder 1905 has been described before with reference to FIG. 6.

The A/V/S sync 1906 may receive a PTS and a Program Clock Reference (PCR) of each of the HEVC bitstream and the XML subtitle and synchronize a video frame with a subtitle.

The SI processor 1907 may receive the SI from the DEMUX and extract OSD information.

The display processor 1908 may receive the video frame and the subtitle, and output a display frame. The display processor 1908 may receive on screen display (OSD) information together with the video frame and the subtitle and output a display frame. The output display frame may be displayed by an image output device and displayed together with the XML subtitle and the video frame described in the present invention.

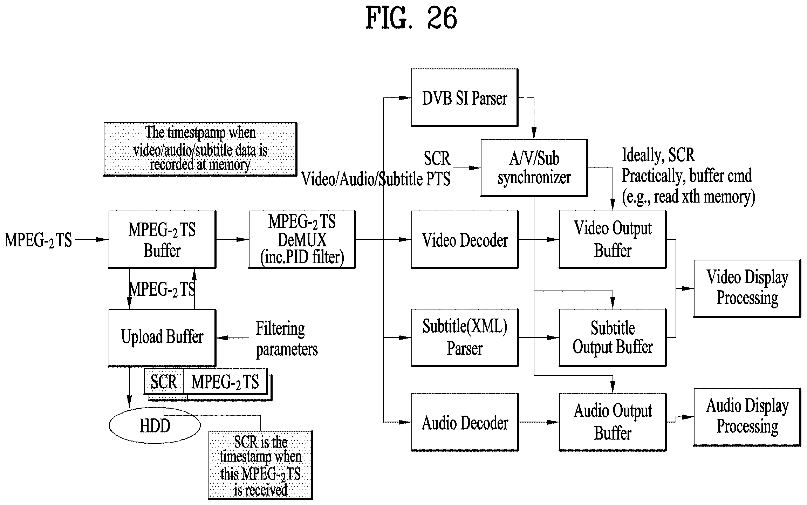

FIG. 26 is a diagram illustrating a configuration of a broadcast signal receiver according to an embodiment of the present invention. The broadcast signal receiver may include at least one of an MPEG-2 TS buffer, an upload buffer, a storage device, an MPEG-2 TS DEMUX, an SI parser, a video decoder, a subtitle (XML) parser, an audio decoder, an A/V/S sync, a video output parser, a subtitle output buffer, an audio output buffer, a video display processor, and/or an audio display process. When an MPEG-2 TS is received, the MPEG-2 TS may be buffered in the MPEG-2 TS buffer. The MPEG-2 TS may be stored in the storage device through the upload buffer. Herein, the MPEG-2 TS may be stored together with a time stamp corresponding to the reception time of the MPEG-2 TS. The MPEG-2 TS DEMUX may include a PID filter, demultiplex the MPEG-2 TS into video data, audio data, subtitle data, and SI, and output the demultiplexed video data, audio data, subtitle data, and SI. The SI parser may parse the SI and transmit the parsed SI to the A/V/S sync. The A/V/S sync may provide synchronization information using a system clock reference (SCR) and a presentation timestamp (PTS) along with the SI. The A/V/S sync may acquire the afore-mentioned PTS values corresponding to the begin time and end time of a subtitle, and perform a synchronization operation.

The video decoder may decode the video data received from the DEMUX and provide the decoded video data to the video output buffer. The subtitle parser may parse the subtitle data received from the DEMUX and provide the parsed subtitle data to the subtitle output buffer. The audio decoder may decode the audio data received from the DEMUX and provide the decoded audio data to the audio output buffer. The buffers may output the received subtitle, video data, and audio data based on the synchronization information received from the A/V/S sync. The subtitle data and the video data may be input to and displayed by the video display processor, and the audio data may be output by the audio display processor. The data may be synchronized based on PTSs. Particularly, the XML subtitle may be synchronized according to the method of converting subtitle time information into a PTS according to an embodiment of the present invention.

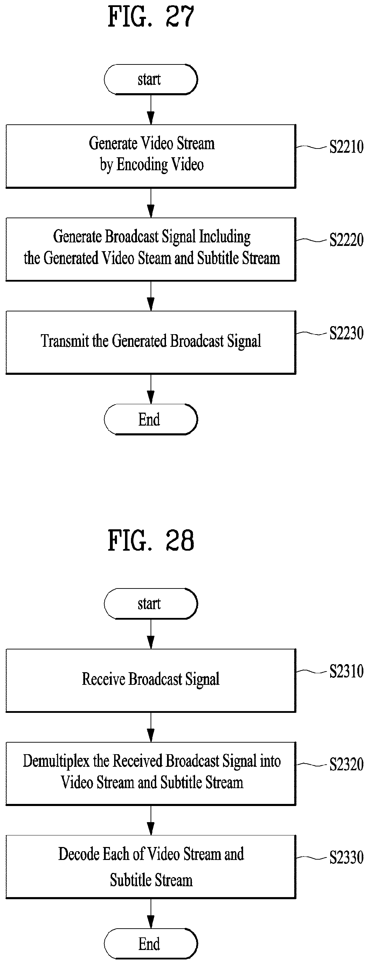

FIG. 27 is a diagram illustrating a method of transmitting a broadcast signal including an XML subtitle according to an embodiment of the present invention. The method of transmitting a broadcast signal including an XML subtitle may include generating a video stream by encoding a video (S2210), generating a broadcast signal including the generated video stream and subtitle information (S2220), and transmitting the generated broadcast signal (S2230).

In the step S2210 of generating a video stream by encoding a video, video data having a resolution of UHD, HD, or SD may be received, and a video stream may be generated by encoding the received video data. The video stream may be encoded by High Efficiency Video Coding (HEVC). The video stream may refer to a video elementary stream (ES) or a packetized elementary stream (PES) in which a video ES is packetized. Along with the video stream, an XML subtitle stream may be generated. The method of configuring an XML subtitle stream has been described before with reference to FIGS. 2 to 5. That is, scenario 1 as a method of using the same ES to transmit a head and a body of XML subtitle data has been described above with reference to FIG. 2, and scenario 1 as a method of dividing subtitle data and transmitting in each ES according to a presentation time has been described above with reference to FIG. 3. In addition, scenario 2 as a method of separately transmitting a head and a body of XML subtitle data has been described above with reference to FIG. 4, and scenario 2 as a method of separately transmitting a body of subtitle data in respective ESs according to presentation times has been described above with reference to FIG. 5. The procedure of packetizing an XML subtitle ES into a PES and related information have been described before with reference to FIGS. 12 to 16.

In the step S2220 of generating a broadcast signal including the generated video stream and subtitle information, a TS may be generated by multiplexing the encoded video stream and subtitle stream. The subtitle stream may be an XML subtitle stream. A header or PES header included in the TS may include subtitle-related information, for example, offset-related information or media timestamp-related information.

In the step S2230 of transmitting the generated broadcast signal, the TS may be transmitted as a broadcast signal. The TS may be channel-coded, modulated, and then transmitted as a broadcast signal.

FIG. 28 is a diagram illustrating a method of receiving a broadcast signal including an XML subtitle according to an embodiment of the present invention. The method of receiving a broadcast signal including an XML subtitle may include receiving a broadcast signal (S2310), demultiplexing the broadcast signal into a video stream and a subtitle stream (S2320), and decoding the video stream (S2330).

In the step S2310 of receiving a broadcast signal, a broadcast signal received through a receiver may be demodulated and then channel-decoded.

In the step S2320 of demultiplexing the broadcast signal into a video stream and a subtitle stream, the channel-decoded broadcast signal may be demultiplexed into a video stream and a subtitle stream by means of a DEMUX.

In the step S2330 of decoding the video stream, the video stream may be decoded and video data may be acquired by means of a video decoder. In this step, subtitle data may be acquired from the subtitle stream by means of a subtitle decoder. The video data and the subtitle data may be synchronized with each other and displayed by the receiver. The synchronization between the video data and the subtitle data may be performed based on PTS information or media time information. As described before with reference to FIGS. 14, 15, and 16, a PTS of an XML subtitle stream may be acquired by converting the begin time and end time information of timed text into a PTS format. In addition, offset information and media timestamp information may be additionally used for the conversion to the PTS format, thereby suppressing generation of errors to a subtitle play time.

According to an embodiment of the present invention, an MPEG-2 TS that provides a digital broadcast service using an XML subtitle (TTML, SMPTE-TT, EBU-TT-D, or the like) may be transmitted.

According to an embodiment of the present invention, an MPEG-2 TS including an XML-based subtitle service may be received, processed, and output.

According to an embodiment of the present invention, an XML-based subtitle service may be provided through a broadcasting network.

According to an embodiment of the present invention, an XML-based subtitle service may be synchronized with video and audio streams.

According to an embodiment of the present invention, a subtitle formed based on XML may be transmitted separately as a head and a body, thereby increasing the transmission efficiency of a terrestrial broadcasting service.

According to an embodiment of the present invention, an XML broadcast subtitle receiver may extract an XML-based subtitle from a terrestrial broadcasting service and display the extracted XML-based subtitle.

According to an embodiment of the present invention, an XML subtitle service for IP streams may be applied to broadcasting. Specifically, the XML subtitle service may be applied to a hybrid broadcasting service as well as media, IP streams, and a broadcasting service, based on one subtitle source, in terms of service providing. The XML subtitle service may support all of images of various sizes in terms of video quality, thereby ensuring future expandability.

While the embodiments have been described with reference to respective drawings for convenience, embodiments may be combined to implement a new embodiment. In addition, designing computer-readable recording media storing programs for implementing the aforementioned embodiments is within the scope of the present invention.

The apparatus and method according to the present invention are not limited to the configurations and methods of the above-described embodiments and all or some of the embodiments may be selectively combined to obtain various modifications.

The image processing methods proposed by the present invention may be implemented as processor-readable code stored in a processor-readable recording medium included in a network device. The processor-readable recording medium includes all kinds of recording media storing data readable by a processor. Examples of the processor-readable recording medium include a ROM, a RAM, a CD-ROM, a magnetic tape, a floppy disk, an optical data storage device and the like, and implementation as carrier waves such as transmission over the Internet. In addition, the processor-readable recording medium may be distributed to computer systems connected through a network, stored and executed as code readable in a distributed manner.

Those skilled in the art will appreciate that the present invention may be carried out in other specific ways than those set forth herein without departing from the spirit and essential characteristics of the present invention. Therefore, the scope of the invention should be determined by the appended claims and their legal equivalents, not by the above description, and all changes coming within the meaning and equivalency range of the appended claims are intended to be embraced therein.

In the specification, both the apparatus invention and the method invention are mentioned and description of both the apparatus invention and the method invention can be applied complementarily.

[Mode for the Invention]

Various embodiments have been described in the best mode for carrying out the invention.

[Industrial Applicability]

The present invention can be used and repeatedly implemented in broadcast and video signal processing fields.

**Claims**

1. A method of transmitting a broadcast signal, the method comprising:

   generating a video stream by encoding video data;
   generating a broadcast signal including the generated video steam and a subtitle stream; and
   transmitting the generated broadcast signal,
   wherein a header of the broadcast signal includes offset information for a presentation time of the subtitle stream.

2. The method according to claim 1, wherein the offset information includes at least one of information indicating the presence or absence of an offset, offset version information, offset format information, and offset scale information, and offset value information indicating an offset value.

3. An apparatus for transmitting a broadcast signal, the apparatus comprising:

   a video encoder for generating a video stream by encoding video data;
   a multiplexer for generating a broadcast signal including the generated video steam and a subtitle stream; and
   a transmitter for transmitting the generated broadcast signal,
   wherein a header of the broadcast signal includes offset information for a presentation time of the subtitle stream.

4. The apparatus according to claim 3, wherein the offset information includes at least one of information indicating the presence or absence of an offset, offset version information, offset format information, and offset scale information, and offset value information indicating an offset value.

5. A method of receiving a broadcast signal, the method comprising:

   receiving a broadcast signal, a header of the broadcast signal including offset information for a presentation time of a subtitle stream;
   demultiplexing the received broadcast signal into a video stream and the subtitle stream;
   decoding each of the video stream and the subtitle stream; and
   synchronizing the video stream with the subtitle stream.

6. The method according to claim 5, wherein the offset information includes at least one of information indicating the presence or absence of an offset, offset version information, offset format information, and offset scale information, and offset value information indicating an offset value.

7. The method according to claim 6, wherein the synchronization comprises converting begin time information and end time information included in the subtitle stream into presentation timestamps (PTSs).

8. The method according to claim 7, wherein the synchronization comprises converting the begin time information and end time information included in the subtitle stream into the PTSs, using the offset information.

9. The method according to claim 8, wherein the synchronization comprises acquiring a play begin PTS by adding a value in PTS units into which a difference between the begin time information included in the subtitle stream and an offset (PTO) is converted to a PTS value of a packet included in the subtitle stream.

10. An apparatus for receiving a broadcast signal, the apparatus comprising:

    a receiver for receiving a broadcast signal, a header of the broadcast signal including offset information about a presentation time of a subtitle stream;
a demultiplexer for demultiplexing the received broadcast signal into a video stream and the subtitle stream;
a decoder for decoding each of the video stream and the subtitle stream; and
a synchronizer for synchronizing the video stream with the subtitle stream.

11. The apparatus according to claim 10, wherein the offset information includes at least one of information indicating the presence or absence of an offset, offset version information, offset format information, and offset scale information, and offset value information indicating an offset value.

12. The apparatus according to claim 11, wherein the synchronizer converts begin time information and end time information included in the subtitle stream into presentation timestamps (PTSs).

13. The apparatus according to claim 12, wherein the synchronizer converts the begin time information and end time information included in the subtitle stream into the PTSs, using the offset information.

14. The apparatus according to claim 13, wherein the synchronizer acquires a play begin PTS by adding a value in PTS units into which a difference between the begin time information included in the subtitle stream and an offset (PTO) is converted to a PTS value of a packet included in the subtitle stream.

# FIG. 1

Contents

Transmitter

Video
(UHD/HD/SD)

Subtitle
(XML,bitmap)

101

Encoding
(HEVC)

102

Synch &
Multiplexing

103

Channel
Coding &
Modulation

Receiver

108

Display
Processing

106

Decoding
(HEVC)

105

De-
multiplexing

104

Demodulation
& Transport
Packet
Decoding

Subtitle
Processing
(e.g., XML
Parsing)

107

# FIG. 2

| TS header | TS payload | TS header | TS payload | TS header | TS payload |
|---|---|---|---|---|---|
| PCR | | PCR | | PCR | |

| PES level | PES header | XML Sub. ES 1 | PES header | XML Sub. ES 2 | PES header | XML Sub. ES 3 |
|---|---|---|---|---|---|---|
| | PTS (360) | | PTS (2160) | | PTS (3960) | |

ES level

| XML Sub. ES 1 (begin = 00:00:00:00 end = 00:00:07:00) | XML Sub. ES 2 (begin = 00:00:10:00 end= 00:00:18:00) | XML Sub. ES 3 (begin = 00:00:20:00 end = 00:00:25:00) |
|---|---|---|

XML Sub. ES 1

```
<tt:tt ttp:timeBase = "media" xml:lang= "en">
  <tt:head>
    <tt:styling>
      <tt:style xml:id= "BaseStyle" tts:color = "white" tts:backbroundColor = "black" .... />
      <tt:style xml:id= "Style1" tts:textAlign = "start" .... />
    </tt:styling>
    <tt:layout>
      <tt:region xml:id= "region1" tts:origin="0% 0%" tts:extent="50% 100%" .... />
    <tt:layout>
  <tt:head>
  <tt:body>
    <tt:div style = "BaseStyle">
      <tt:p region = "region1" style = "Style1" begin= "00:00:00:00" end="00:00:01:00"> text line 1 </tt:p>
      <tt:p region = "region1" begin= "00:00:01:00" end="00:00:03:00"> text line 2 </tt:p>
      <tt:p region = "region1" begin= "00:00:03:00" end="00:00:04:00"> text line 3 </tt:p>
      <tt:p region = "region1" begin= "00:00:05:00" end="00:00:07:00"> text line 4 </tt:p>
    </tt:div>
  </tt:body>
</tt:tt>
```

# FIG. 3

| TS header | TS payload | TS header | TS payload | TS header | TS payload |
|---|---|---|---|---|---|
| PCR | | PCR | | PCR | |

| PES level | PES header | XML Sub. ES 1 | PES header | XML Sub. ES 2 | PES header | XML Sub. ES 3 |
|---|---|---|---|---|---|---|
| | PTS (360) | | PTS (540) | | PTS (720) | |

| ES level | XML Sub. ES 1 (begin = 00:00:00:00 end = 00:00:01:00) | XML Sub. ES 2 (begin = 00:00:01:00 end= 00:00:03:00) | XML Sub. ES 3 (begin = 00:00:03:00 end = 00:00:04:00) |
|---|---|---|---|

**XML Sub. ES 1**

```
<tt:tt ttp:timeBase = "media" xml:lang= "en">
  <tt:head>
    <tt:styling>
      <tt:style xml:id= "BaseStyle" tts:color = "white" tts:backbroundColor = "black" .... />
      <tt:style xml:id= "Style1" tts:textAlign = "start" .... />
    </tt:styling>
    <tt:layout>
      <tt:region xml:id= "region1" tts:origin="0% 0%" tts:extent="50% 100%" .... />
    <tt:layout>
  <tt:head>
  <tt:body>
    <tt:div style = "BaseStyle">
      <tt:p region = "region1" style = "Style1" begin= "00:00:00:00" end="00:00:01:00"> text line 1 </tt:p>
    </tt:div>
  <tt:body>
</tt:tt>
```

**XML Sub. ES 2**

```
<tt:tt ttp:timeBase = "media" xml:lang= "en">
  <tt:head>
    <tt:styling>
      <tt:style xml:id= "BaseStyle" tts:color = "white" tts:backbroundColor = "black" .... />
    </tt:styling>
    <tt:layout>
      <tt:region xml:id= "region1" tts:origin="0% 0%" tts:extent="50% 100%" .... />
    <tt:layout>
  <tt:head>
  <tt:body>
    <tt:div style = "BaseStyle">
      <tt:p region = "region1" begin= "00:00:01:00" end="00:00:03:00"> text line 2 </tt:p>
    </tt:div>
  <tt:body>
</tt:tt>
```

# FIG. 4

| TS header | TS payload | TS header | TS payload | TS header | TS payload |
|---|---|---|---|---|---|
| PCR | | PCR | | PCR | |

| | | | | | |
|---|---|---|---|---|---|
| PES level | PES header | XML Sub. ES 1 | PES header | XML Sub. ES 2 | PES header | XML Sub. ES 3 |
| | PTS (360) | | PTS (360) | | PTS (2160) | |

| | | | |
|---|---|---|---|
| ES level | XML Sub. ES 1 | XML Sub. ES 2 (begin = 00:00:00:00 end= 00:00:07:00) | XML Sub. ES 3 (begin = 00:00:10:00 end = 00:00:18:00) |

**XML Sub. ES 1**

```
<tt:tt ttp:timeBase = "media" xml:lang= "en">
  <tt:head>
    <tt:styling>
      <tt:style xml:id= "BaseStyle" tts:color = "white" tts:backbroundColor = "black" .... />
      <tt:style xml:id= "Style1" tts:textAlign = "start"  .... />
    </tt:styling>
    <tt:layout>
      <tt:region xml:id= "region1" tts:origin="0% 0%" tts:extent="50% 100%" .... />
    <tt:layout>
  <tt:head>
</tt:tt>
```

**XML Sub. ES 2**

```
<tt:tt ttp:timeBase = "media" xml:lang= "en">
  <tt:body>
    <tt:div style = "BaseStyle">
      <tt:p region = "region1" style = "Style1" begin= "00:00:00:00" end="00:00:01:00"> text line 1 </tt:p>
      <tt:p region = "region1" begin= "00:00:01:00" end="00:00:03:00"> text line 2 </tt:p>
      <tt:p region = "region1" begin= "00:00:03:00" end="00:00:04:00"> text line 3 </tt:p>
      <tt:p region = "region1" begin= "00:00:05:00" end="00:00:07:00"> text line 4 </tt:p>
    </tt:div>
  <tt:body>
</tt:tt>
```

# FIG. 5

| TS header | TS payload | TS header | TS payload | TS header | TS payload |
|---|---|---|---|---|---|
| PCR | | PCR | | PCR | |

PES level

| PES header | XML Sub. ES 1 | PES header | XML Sub. ES 2 | PES header | XML Sub. ES 3 |
|---|---|---|---|---|---|
| PTS (360) | | PTS (360) | | PTS (540) | |

ES level

| XML Sub. ES 1 | XML Sub. ES 2 (begin = 00:00:00:00 end= 00:00:01:00) | XML Sub. ES 3 (begin = 00:00:01:00 end = 00:00:03:00) |
|---|---|---|

**XML Sub. ES 1**

```
<tt:tt ttp:timeBase = "media" xml:lang= "en">
   <tt:head>
     <tt:styling>
        <tt:style xml:id= "BaseStyle" tts:color = "white" tts:backbroundColor = "black" .... />
        <tt:style xml:id= "Style1" tts:textAlign = "start"  .... />
     </tt:styling>
     <tt:layout>
        <tt:region xml:id= "region1" tts:origin="0% 0%" tts:extent="50% 100%" .... />
     <tt:layout>
   <tt:head>
</tt:tt>
```

**XML Sub. ES 2**

```
<tt:tt ttp:timeBase = "media" xml:lang= "en">
   <tt:body>
     <tt:div style = "BaseStyle">
        <tt:p region = "region1" style = "Style1" begin= "00:00:00:00" end="00:00:01:00"> text line 1 </tt:p>
     </tt:div>
   <tt:body>
</tt:tt>
```

**XML Sub. ES 3**

```
<tt:tt ttp:timeBase = "media" xml:lang= "en">
   <tt:body>
     <tt:div style = "BaseStyle">
        <tt:p region = "region1" begin= "00:00:01:00" end="00:00:03:00"> text line 2 </tt:p>
     </tt:div>
   <tt:body>
</tt:tt>
```

**XML Sub. ES 3**

```
<tt:tt ttp:timeBase = "media" xml:lang= "en">
   <tt:body>
     <tt:div style = "BaseStyle">
        <tt:p region = "region1" begin= "00:00:03:00" end="00:00:04:00"> text line 3 </tt:p>
     </tt:div>
   <tt:body>
</tt:tt>
```

# FIG. 6

# FIG. 7

| Syntax | No. of bits | Mnemonic |
|---|---|---|
| transport_packet( ){ | | |
|     sync_byte | 8 | bslbf |
|     transport_error_indicator | 1 | bslbf |
|     payload_unit_start_indicator | 1 | bslbf |
|     transport_priority | 1 | bslbf |
|     PID | 13 | uimsbf |
|     transport_scrambling_control | 2 | bslbf |
|     adaptation_field_control | 2 | bslbf |
|     contiunity_counter | 4 | uimsbf |
|     if(adaptation_field_control=='10'\|\|adaptation_field_control=='I I'){ | | |
|         adaption_field() | | |
|     } | | |
|     if(adaptation_field_control=='01'\|\|adaptation_field_control=='I I'){ | | |
|         for (i=0;i<N;i++){ | | |
|             data_byte | 8 | bslbf |
|         } | | |
|     } | | |
| } | | |

# FIG. 8

| Syntax | No. of bits | Mnemonic |
|---|---|---|
| adaptation_field(){ | | |
|     adaptation_field_length | 8 | uimsbf |
|     if(adaptation_field_length>0){ | | |
|         if(adaptation_field_length>0){ | 1 | bslbf |
|            discountinuity_indicator | 1 | bslbf |
|            random_access_indicator | 1 | bslbf |
|            elementary_stream_priority_indicator | 1 | bslbf |
|            PCR_flag | 1 | bslbf |
|            OPCR_flag | 1 | bslbf |
|            splicing_point_flag | 1 | bslbf |
|            transport_private_data_flag | 1 | bslbf |
|            adaptation_field_extension_flag | | |
|            if(PCR_flag=='1'){ | | |
|                program_clock_reference_base | 33 | uimsbf |
|                reserved | 6 | bslbf |
|                program_clock_reference_extension | 9 | uimsbf |
|            } | | |
|            if(OPCR_flag=='1'){ | | |
|                original_program_clock_reference_base | 33 | uimsbf |
|                reserved | 6 | bslbf |
|                original_program_clock_reference_extension | 9 | uimsbf |
|            } | | |
|            if(splicing_polnt_flag=='1'){ | | |
|                splice_countdown | 8 | tcimsbf |
|            } | | |
|            if(transport_private_data_flag=='1'){ | | |
|                transport_private_data_length | 8 | uimsbf |
|                for(i=0;i<transport_private_data_length;i++){ | | |
|                   private_data_byte | 8 | bslbf |
|                } | | |
|            } | | |
|            if(adaptation_field_extension_flag=='1'){ | | |
|                adaptation_field_extension_length | 8 | uimsbf |
|                ltw-flag | 1 | bslbf |
|                piecewise-rate-flag | 1 | bslbf |
|                seamless_splice_flag | 1 | bslbf |
|                reserved | 5 | bslbf |
|                if(ltw_flag=='1'){ | | |
|                   ltw_valid_flag | 1 | bslbf |
|                   ltw_offset | 15 | uimsbf |
|                } | | |
|                if(piecewise_rate_flag=='1'){ | | |
|                  reserved | 2 | bslbf |
|                  piecswise_rate | 22 | uimsbf |
|                } | | |
|                if(seamless_splice_flag=='1'){ | | |
|                  splice_type | 4 | bslbf |
|                  DTS_next_AU[32..30] | 3 | bslbf |
|                  marker_bit | 1 | bslbf |
|                  DTS_next_AU[29..15] | 15 | bslbf |
|                  marker_bit | 1 | bslbf |
|                  DTS_next_AU[14..0] | 15 | bslbf |
|                  marker_bit | 1 | bslbf |
|                } | | |
|                for(i=0;i<N;i++){ | | |
|                  reserved | 8 | bslbf |
|                } | | |
|            } | | |
|            for(i=0;i<N;i++){ | | |
|                stuffing_byte | 8 | bslbf |
|            } | | |
|     } | | |
| } | | |

## FIG. 9

| Syntax | No. of bits | Mnemonic |
|---|---|---|
| PES_packet(){ | | |
| packet_start_code_prefix | 24 | bslbf |
| stream_id | 8 | uimsbf |
| PES_packet_lrngth | 16 | uimsbf |
| if(stream_id!=program_stream_map | | |
| && stream_id!=padding_stream | | |
| && stream_id!=private_stream_2 | | |
| && stream_id!=ECM | | |
| && stream_id!=EMM | | |
| && stream_id!=program_stream_directory | | |
| && stream_id!=DSMCC_stream | | |
| && stream_id!=ITU-T Rec.H.222.1type E stream){ | | |
| '10' | 2 | bslbf |
| PES_scrambling_control | 2 | bslbf |
| PES_priority | 1 | bslbf |
| data_alignment_indicator | 1 | bslbf |
| copyright | 1 | bslbf |
| original_or_copy | 1 | bslbf |
| PTS_DTS_flags | 2 | bslbf |
| ESCR_flag | 1 | bslbf |
| ES_rate_flag | 1 | bslbf |
| DSM_trick_mode_flag | 1 | bslbf |
| additional_copy_info_flag | 1 | bslbf |
| PES_CRS_flag | 1 | bslbf |
| PES_extension_flag | 1 | bslbf |
| PES_header_data_length | 8 | uimsbf |
| if(PTS_DTS_flags=='10'){ | | |
| '0010' | 4 | bslbf |
| PTS [32...30] | 3 | bslbf |
| marker_bit | 1 | bslbf |
| PTS [29...15] | 15 | bslbf |
| marker_bit | 1 | bslbf |
| PTS [14...0] | 15 | bslbf |
| marker_bit | 1 | bslbf |
| } | | |
| if(PTS_DTS_flags=='11'){ | | |
| '0011' | 4 | bslbf |
| PTS [32...30] | 3 | bslbf |
| marker_bit | 1 | bslbf |
| PTS [29...15] | 15 | bslbf |
| if(PES_extension_flag=='1'){ | | |
| PES_private_data_flag | 1 | bslbf |
| pack_header_field_flag | 1 | bslbf |
| program_packet_sequence_counter_flag | 1 | bslbf |
| P-STD_buffer_flag | 1 | bslbf |
| reserved | 3 | bslbf |
| PES_extension_flag_2 | 1 | bslbf |
| if(PES_private_data_flag=='1'){ | | |
| PES_private_data | 128 | bslbf |
| } | | |
| if(pack_header_field_flag=='1'){ | | |
| pack_field_length | 8 | uimsbf |
| pack_header() | | |
| } | | |
| if(program_packet_sequence_counter_flag=='1'){ | | |
| market_bit | 1 | bslbf |
| } | | |
| for(o=0;i<PES extension field length;i++) { | | |
| reserved | 8 | Bslbf |
| } | | |
| } | | |
| } | | |
| } | | |
| for(i<0;i<N1;i++){ | | |
| stuffing_byte | 8 | bslbf |
| } | | |
| for(i<0;i<N2;i++){ | | |
| PES_packet_data_byte | 8 | bslbf |
| } | | |
| } | | |
| else if (stream_id==program_stream_map | | |
| || stream_id==private_stream_2 | | |
| || stream_id==ECM | | |
| || stream_id==EMM | | |
| || stream_id==program_stream_directory | | |
| || stream_id==DSMCC_stream | | |
| || stream_id==ITU-T Rec.H.222.1 type E stream) { | | |
| for (i=0;i<PES_packet_length;i++) { | | |
| PES_packet_data_byte | 8 | bslbf |
| } | | |
| } | | |
| else if (stream_id==padding_stream) { | | |
| for(i<0;i<PES_packet_length;i++) { | | |
| padding_byte | 8 | bslbf |
| } | | |
| } | | |
| } | | |

33

# FIG. 10

| | No. Of bits | Format |
|---|---|---|
| PES_data_field( ) { | | |
|     payload_format | 4 | uimsbf |
|     reserved | 3 | '111' |
|     CRC_flag | 1 | bslbf |
|     subtitle_stream_type | 4 | uimsbf |
|     subtitle_stream_coding | 4 | uimsbf |
|     for(i=0;i<N;i++) | | |
|       subtitle_stream_byte | 8 | uimsbf |
|     } | | |
|     if(CRC_flag =='1'){ | | |
|       CRC_32 | 32 | uimsbf |
|     } | | |
| } | | |

# FIG. 11

```
<tt:tt ttp:timeBase = "media" xml:lang= "en">
  <tt:head>
    <tt:styling>
      <tt:style xml:id= "BaseStyle" tts:color = "white" tts:backbroundColor = "black" .... />
      <tt:style xml:id= "Style1" tts:textAlign = "start"  .... />
    </tt:styling>
    <tt:layout>
      <tt:region xml:id= "region1" tts:origin="0% 0%" tts:extent="50% 100%" .... />
    </tt:layout>
  </tt:head>
  <tt:body>
    <tt:div style = "BaseStyle">
      <tt:p region = "region1" style = "Style1" begin= "00:00:00:00" end="00:00:01:00"> text line 1
</tt:p>
      <tt:p region = "region1" begin= "00:00:01:00" end="00:00:03:00"> text line 2 </tt:p>
      <tt:p region = "region1" begin= "00:00:03:00" end="00:00:04:00"> text line 3 </tt:p>
      <tt:p region = "region1" begin= "00:00:05:00" end="00:00:07:00"> text line 4 </tt:p>
    </tt:div>
  </tt:body>
</tt:tt>
```

| ftyp | moov | mdat | |
|---|---|---|---|
| | | sample 1 | sample N |

| styp | sidx | moof | mdat | |
|---|---|---|---|---|
| | | | sample 1 | sample N |

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
  <p begin="0.000s" end="1.340s">Text line1</p>
  <p begin="1.340s" end="2.983s">Text line2</p>
  ...
  </div>
  </body>
</tt>
```

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
  <p begin="0.000s" end="1.340s">Text line1</p>
  <p begin="1.340s" end="2.983s">Text line2</p>
  ...
  </div>
  </body>
</tt>
```

# FIG. 12

| MPEG-2 TS Header | PES Header | |
|---|---|---|
| PID = CC | PTS=PTS$_0$ | |

```
PES_packet_data_byte( )
{
    payload_format = 0x02
    CRC_flag=1
    subtitle_stream_type = TTML
    subtitle_stream_coding = uncompressed
    subtitle_stream_bytes( ) = TT1
    CRC_32( )
}
```

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
  <p begin="0.000s" end="1.340s">Let's take a look at the 4th platform</p>
  <p begin="1.340s" end="2.983s">running on the Preview</p>
  ...
  </div>
  </body>
</tt>
```

broadcast presentation timeline

| | PTS0 | | PTSN |
|---|---|---|---|
| | V1 | V2 | VN |

$\uparrow$PTS$_{b1}$  $\uparrow$PTS$_{e1}$

Timed text presentation timeline

TT1

| 1$^{st}$ timed text paragraph | 2$^{nd}$ timed text paragraph |
|---|---|

EP 3 280 147 A1

# FIG. 13

Pre-recorded timed text

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
    <p begin="0.000s" end="1.340s">Let's take a look at...</p>
    <p begin="1.340s" end="2.983s">running on the Preview</p>
    ...
    <p begin="3595.140s" end="3598.340s">continued...</p>
    <p begin="3598.340" end="3600.0s">End on ..</p>
  </div>
  </body>
</tt>
```

Timed text #N

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
    <p begin="3595.140s" end="3598.340s">continued...</p>
    <p begin="3598.340" end="3600.0s">End on ..</p>
  </div>
  </body>
</tt>
```

... ▢ .. ▢ ...

Timed text #1

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
    <p begin="0.000s" end="1.340s">Let's take a look at ..</p>
    <p begin="1.340s" end="2.983s">running on the Preview</p>
  </div>
  </body>
</tt>
```

| MPEG-2 TS Header | PES Header | | | | | | | MPEG-2 TS Header | PES Header | | ⟹ |

PID = CC    PTS=PTS$_N$

PID = CC    PTS=PTS$_0$

| MPEG-2 TS Header | PES Header | |

PID = CC    PTS=PTS$_N$

Timed text #N

```
<tt xml:lang="en"xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
    <p begin="3595.140s" end="3598.340s">continued...</p>
    <p begin="3598.340" end="3600.0s">End on ..</p>
  </div>
  </body>
</tt>
```

# FIG. 14

| | No. Of bits | Format |
|---|---|---|
| PES_data_field( ) { | | |
|     payload_format | 7 | uimsbf |
|    reserved | 3 | '111' |
|     CRC_flag | 1 | bslbf |
|    subtitle_stream_type | 4 | uimsbf |
|    subtitle_stream_coding | 3 | uimsbf |
|    presentationTime_offset_flag | 1 | bslbf |
|    if(presentationTime_offset_flag=='1'){ | | |
|     presentationTime_offset_format | 7 | uimsbf |
|     presentationTime_offset_version | 1 | uimsbf |
|     If(presentationTime_offset_format == "0x00"){ | | |
|      presentationTime_offset | 32 or 64 | uimsbf |
|     }else if(presentationTime_offset_format == "0x01"){ | | |
|      presentationTime_offset_scale | 32 | uimsbf |
|      presentationTime_offset | 32 or 64 | uimsbf |
|     }else{ | | |
|       private_data_length /*LEN*/ | 16 | uimsbf |
|       private_data_bytes() | 8*LEN | |
|     } | | |
|    for(i=0;i<N;i++) | | |
|     subtitle_stream_byte | 8 | uimsbf |
|    } | | |
|    if(CRC_flag=='1'){ | | |
|     CRC_32 | 32 | uimsbf |
|    } | | |
| } | | |

# FIG. 15

```
| MPEG-2   | PES    |        |
| TS Header| Header |        |
```
PID = CC        PTS=PTS_N

```
PES_packet_data_byte( )
{
    payload_format = 0x02
    CRC_flag=1
    subtitle_stream_type = TTML
    subtitle_stream_coding = uncompressed
    presentationTime_offset_flag=1
    presentationTime_offset_format=0x01
    ..
    presentationTime_offset = 3595.140
    subtitle_stream_bytes( )
    CRC_32( )
}
```

```
<tt xml:lang=""xmlns="http://www.w3.org/ns/ttml">
  <head>
    <metadata>
    ...
    </metadata>
    <styling>
    ...
    </styling>
    <layout>
    ...
    </layout>
  </head>
  <body>
  <div region="r1">
  <p begin="3595.140s" end="3598.340s">continued...</p>
  <p begin="3598.340s" end="3600.0s">End on ..</p>
  </div>
  </body>
</tt>
```

# FIG. 16

|  | No. Of bits | Format |
|---|---|---|
| PES_data_field() { |  |  |
|     payload_format | 7 | uimsbf |
|     reserved | 3 | '111' |
|     CRC_flag | 1 | bslbf |
|     subtitle_stream_type | 4 | uimsbf |
|     subtitle_stream_coding | 3 | uimsbf |
|     presentationTime_offset_flag | 1 | bslbf |
|     if(presentationTime_offset_flag=='1'){ |  |  |
|       has_offset_second | 1 | bslbf |
|       has_offset_mediaTime | 1 | bslbf |
|       presentationTime_offset_version | 1 | uimsbf |
|       reserved | 5 | '11111' |
|       If(has_offset_second== '1'){ |  |  |
|         presentationTime_format | 8 | uimsbf |
|         presentationTime_offset | 32 or 64 | uimsbf |
|       } |  |  |
|       If(has_offset_mediaTime== '1'){ |  |  |
|         presentationTime_offset_scale | 32 | uimsbf |
|         presentationTime_offset | 32 or 64 | uimsbf |
|       } |  |  |
|     } |  |  |
|     for(i=0;i<N;i++) |  |  |
|       subtitle_stream_byte | 8 | uimsbf |
|     } |  |  |
|     if(CRC_flag =='1'){ |  |  |
|       CRC_32 | 32 | uimsbf |
|     } |  |  |
| } |  |  |

# FIG. 17

| Syntax | No. of bits | Mnemonic |
|---|---|---|
| adaptation_field() { | | |
| adaptation_field_length | 8 | uimsbf |
| if (adaptation_field_length > 0) { | | |
| discontinuity_indicator | 1 | bslbf |
| random_access_indicator | 1 | bslbf |
| elementary_stream_priority_indicator | 1 | bslbf |
| PCR_flag | 1 | bslbf |
| OPCR_flag | 1 | bslbf |
| splicing_point_flag | 1 | bslbf |
| transport_private_data_flag | 1 | bslbf |
| adaptation_field_extension_flag | 1 | bslbf |
| if (PCR_flag == '1') { | | |
| program_clock_reference_base | 33 | uimsbf |
| reserved | 6 | bslbf |
| program_clock_reference_extension | 9 | uimsbf |
| } | | |
| if (OPCR_flag == '1') { | | |
| original_program_clock_reference_base | 33 | uimsbf |
| reserved | 6 | bslbf |
| original_program_clock_reference_extension | 9 | uimsbf |
| } | | |
| if (splicing_point_flag == '1') { | | |
| splice_countdown | 8 | tcimsbf |
| } | | |
| if (transport_private_data_flag == '1') { | | |
| transport_private_data_length | 8 | uimsbf |
| for (i = 0; i < transport_private_data_length; i++) { | | |
| private_data_byte | 8 | bslbf |
| } | | |
| } | | |
| if (adaptation_field_extension_flag == '1') { | | |
| adaptation_field_extension_length | 8 | uimsbf |
| ltw_flag | 1 | bslbf |
| piecewise_rate_flag | 1 | bslbf |
| seamless_splice_flag | 1 | bslbf |
| temi_descriptor_not_present_flag | 1 | bslbf |
| reserved | 4 | bslbf |
| if (ltw_flag == '1') { | | |
| ltw_valid_flag | 1 | bslbf |
| ltw_offset | 15 | uimsbf |
| } | | |
| if (piecewise_rate_flag == '1') { | | |
| reserved | 2 | bslbf |
| piecewise_rate | 22 | uimsbf |
| } | | |
| if (seamless_splice_flag == '1') { | | |
| splice_type | 4 | bslbf |
| DTS_next_AU[32..30] | 3 | bslbf |
| marker_bit | 1 | bslbf |
| DTS_next_AU[29..15] | 15 | bslbf |
| marker_bit | 1 | bslbf |
| DTS_next_AU[14..0] | 15 | bslbf |
| marker_bit | 1 | bslbf |
| } | | |
| if (temi_descriptor_not_present_flag == '0') { | | |
| for (i = 0; i < N; i++) { | | |
| temi_descriptor() | 8 | bslbf |
| } | | |
| } | | |
| } | | |
| for (i = 0; i < N; i++) { | | |
| reserved | 8 | bslbf |
| } | | |
| } | | |
| for (i = 0; i < N; i++) { | | |
| stuffing_byte | 8 | bslbf |
| } | | |
| } | | |
| } | | |

| Syntax | No. of bits | Mnemonic |
|---|---|---|
| temi_timeline_descriptor { | | |
| temi_descr_tag | 8 | uimsbf |
| temi_descr_length | 8 | uimsbf |
| | | |
| has_timestamp | 2 | uimsbf |
| has_ntp | 1 | |
| has_ptp | 1 | |
| has_timecode | 2 | uimsbf |
| force_reload | 1 | |
| reserved | 1 | |
| timeline_id | 8 | uimsbf |
| | | |
| if (has_timestamp) { | | |
| timescale | 32 | uimsbf |
| if (has_timestamp==1) { | | |
| media_timestamp | 32 | uimsbf |
| } else if (has_timestamp==2) { | | |
| media_timestamp | 64 | uimsbf |
| } | | |
| } | | |
| if (has_ntp) { | | |
| ntp_timestamp | 64 | uimsbf |
| } | | |
| if (has_ptp) { | | |
| ptp_timestamp | 80 | uimsbf |
| } | | |
| if (has_timecode) { | | |
| drop | 1 | |
| frames_per_tc_seconds | 15 | uimsbf |
| duration | 16 | uimsbf |
| if (has_timecode==1) { | | |
| short_time_code | 24 | uimsbf |
| } else if (has_timecode==2) { | | |
| long_time_code | 64 | uimsbf |
| } | | |
| } | | |
| } | | |

# FIG. 18

```
MPEG-2    PTS_0
TS Header
PID = CC
```

```
temi_timeline_descriptor {
    temi_descr_tag
    temi_descr_length
    ...
    has_timesstamp = 1
    ...
    if(has_timstamp) {
        timescale=scale_0
        ...
        media_timestamp=MT_0
    }
}
```

```
PES_packet_data_byte( )
{
    payload_format = 0x02
    CRC_flag=1
    subtitle_stream_type = TTML
    subtitle_stream_coding = uncompressed
    ..
    subtitle_stream_bytes( )
    CRC_32( )
}
```

```
<?xml version="1.0" encoding="UTF-8"?>
<tt xmlns="http://www.w3.org/ns/ttml"space="default" p:timeBase="clock"
lang="en"p:cellResolution="50 30" xmlns:p="http://www.w3.org/ns/ttml#parameter"
xmlns:s="http://www.w3.org/ns/ttml#styling"  xmlns:m="http://www.w3.org/ns/
ttml#metadata" xmlns:ebuttm="urn:ebu:tt:metadata"
xmlns:ebutts="urn:ebu:tt:style">
    <head>
        <metadata>
            ...
        </metadata>
        <styling>
            <style xml:id="defaultStyle" s:fontSize="80%" s:lineHeight="125%"
s:textAlign="left" s:color="##FF00FF" s:backgroundColor="##660033"
s:fontStyle="normal" s:fontWeight="normal" s:textDecoration="none"
s:fontFamily="monospaceSansSerif"/>
        </styling>
        <layout>
            <region xml:id="defaultRegion" s:extent="80%80%" s:origin="10%10%
s:padding="0%" s:displayAlign="after" s:writingMode="lrtb"/>
        </layout>
    </head>
    <body>
        <div xml:id="SGN0"
            <p begin="00:00:10.000" end"00:00:15.000" style="defaultStyle"
region="defaultRegion" xml:id="sub1">Hello,I am a EBU-TT-D subtitle 1</p>
        </div>
    </body>
</tt>
```

# FIG. 19

| Syntax | Number of bits | Identifier |
|---|---|---|
| service_description_section(){ | | |
|     table_id | 8 | uimsbf |
|     section_syntax_indicator | 1 | bslbf |
|     reserved_future_use | 1 | bslbf |
|     reserved | 2 | bslbf |
|     section_length | 12 | uimsbf |
|     transport_stream_id | 16 | uimsbf |
|     reserved | 2 | bslbf |
|     version_number | 5 | uimsbf |
|     current_next_indicator | 1 | bslbf |
|     section_number | 8 | uimsbf |
|     last_section_number | 8 | uimsbf |
|     original_network_id | 16 | uimsbf |
|     reserved_future_use | 8 | bslbf |
|     for (i=0;i<N;i++){ | | |
|         service_id | 16 | uimsbf |
|         reserved_future_use | 6 | bslbf |
|         ETT_schedule_flag | 1 | bslbf |
|         ETT_present_following_flag | 1 | bslbf |
|         running_status | 3 | uimsbf |
|         free_CA_mode | 1 | bslbf |
|         descriptors_loop_length | 12 | uimsbf |
|         for (j=0;j<N;j ++){ | | |
|             desriptor () | | |
|         } | | |
|     } | | |
|     CRC_32 | 32 | rpchof |
| } | | |

# FIG. 20

| Syntax | Number of bits | Identifier |
|---|---|---|
| component_descriptor(){ | | |
| descriptor_tag | 8 | uimsbf |
| descriptor_length | 8 | uimsbf |
| reserved_future_use | 4 | bslbf |
| sream_content | 4 | uimsbf |
| component_type | 8 | uimsbf |
| component_tag | 8 | uimsbf |
| ISO_639_language_code | 24 | bslbf |
| for (i=0;i<N;i++){ | | |
| text_char | 8 | uimsbf |
| } | | |
| } | | |

# FIG. 21

| Syntax | Number of bits | Identifier |
|---|---|---|
| TS_program_map_section( ){ | | |
| table_id | 8 | uimsbf |
| section_syntax_indicator | 1 | bslbf |
| '0' | 1 | bslbf |
| reserved | 2 | bslbf |
| section_length | 12 | uimsbf |
| program_number | 16 | uimsbf |
| reserved | 2 | bslbf |
| version_number | 5 | uimsbf |
| current_next_indicator | 1 | bslbf |
| section-number | 8 | uimsbf |
| last_section_number | 8 | uimsbf |
| reserved | 3 | bslbf |
| PCR_PID | 13 | uimsbf |
| reserved | 4 | bslbf |
| program_info_length | 12 | uimsbf |
| for (i=0;i<N;i++){ | | |
| descriptor() | | |
| } | | |
| for (i=0;i<N1;i++){ | | |
| stream_type | 8 | uimsbf |
| reserved | 3 | bslbf |
| elementary_PID | 13 | uimsbf |
| reserved | 4 | bslbf |
| ES_info_length | 12 | uimsbf |
| for (i=0;i<N2;i++){ | | |
| descriptor() | | |
| } | | |
| } | | |
| CRC_32 | 32 | rpchof |
| } | | |

## FIG. 22

| Syntax | Number of bits | Identifier |
|---|---|---|
| subtitling_descriptor(){ | | |
|    descriptor_tag | 8 | uimsbf |
|    descriptor_length | 8 | uimsbf |
|    for (i=0;i<N;i++){ | | |
|       ISO_639_language_code | 24 | bslbf |
|       subitling_type | 8 | bslbf |
|       composition_page_id | 16 | bslbf |
|       ancillary_page_id | 16 | bslbf |
|    } | | |
| } | | |

# FIG. 23

1701

| encoder | → | multiplexer | → | transmitter |
|---------|---|-------------|---|-------------|

1702          1703          1704

# FIG. 24

1801

| Receiver | → | DEMUX | → | Decoder |
|----------|---|-------|---|---------|

1802          1803          1804

# FIG. 25

# FIG. 26

MPEG-2 TS →

**MPEG-2 TS Buffer**

**The timestpamp when video/audio/subtitle data is recorded at memory**

↓ MPEG-2 TS ↑

**Upload Buffer** ← Filtering parameters

| SCR | MPEG-2 TS |

**HDD**

**SCR is the timestamp when this MPEG-2 TS is received**

**MPEG-2 TS DeMUX (inc. PID filter)**

Video/Audio/Subtitle PTS

**DVB SI Parser**

SCR → **A/V/Sub synchronizer**

Ideally, SCR
Practically, buffer cmd
(e.g., read xth memory)

**Video Decoder**

**Video Output Buffer**

**Video Display Processing**

**Subtitle(XML) Parser**

**Subtitle Output Buffer**

**Audio Decoder**

**Audio Output Buffer**

**Audio Display Processing**

EP 3 280 147 A1

# FIG. 27

```
            start

    Generate Video Stream
    by Encoding Video          ── S2210

    Generate Broadcast Signal Including
    the Generated Video Steam and Subtitle Stream   ── S2220

    Transmit the Generated Broadcast Signal   ── S2230

            End
```

# FIG. 28

```
            start

    Receive Broadcast Signal      ── S2310

    Demultiplex the Received Broadcast Signal into
    Video Stream and Subtitle Stream    ── S2320

    Decode Each of Video Stream and
    Subtitle Stream         ── S2330

            End
```

## INTERNATIONAL SEARCH REPORT

| | International application No. |
|---|---|
| | **PCT/KR2016/003214** |

| A. | CLASSIFICATION OF SUBJECT MATTER |
|---|---|

*H04N 21/236(2011.01)i, H04N 21/488(2011.01)i, H04N 21/8547(2011.01)i, H04N 21/8543(2011.01)i, H04N 5/278(2006.01)i*

According to International Patent Classification (IPC) or to both national classification and IPC

| B. | FIELDS SEARCHED |
|---|---|

Minimum documentation searched (classification system followed by classification symbols)

H04N 21/236; H04N 13/00; H04N 7/173; H04N 5/44; H04N 7/08; H04N 13/04; H04N 21/488; H04N 21/8547; H04N 21/8543; H04N 5/278

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: broadcasting, video, subtitles, stream, offset information, PTS(Presentation Time Stamp)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2011-129631 A2 (SAMSUNG ELECTRONICS CO., LTD. et al.) 20 October 2011 See claims 1, 6; paragraphs [0041]-[0073]; and figure 1. | 1-6,10-11 |
| Y | | 7-9,12-14 |
| Y | WO 2012-099359 A2 (SAMSUNG ELECTRONICS CO., LTD. et al.) 26 July 2012 See paragraphs [0052], [0100]; and figures 1, 9. | 7-9,12-14 |
| A | KR 10-2011-0115103 A (SAMSUNG ELECTRONICS CO., LTD.) 20 October 2011 See paragraphs [0005]-[0012]; and figure 25. | 1-14 |
| A | KR 10-2011-0072181 A (ELECTRONICS AND TELECOMMUNICATIONS RESEARCH INSTITUTE) 29 June 2011 See paragraphs [0011]-[0029]; and figure 1. | 1-14 |
| A | WO 2013-088986 A1 (SONY CORP.) 20 June 2013 See abstract; and paragraphs [0002]-[0005]. | 1-14 |

| ☐ | Further documents are listed in the continuation of Box C. | ☒ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 AUGUST 2016 (26.08.2016) | **26 AUGUST 2016 (26.08.2016)** |

| Name and mailing address of the ISA/KR | Authorized officer |
|---|---|
| Korean Intellectual Property Office Government Complex-Daejeon, 189 Seonsa-ro, Daejeon 302-701, Republic of Korea Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/003214**

| Patent document cited in search report | Publication date | Patent family member | Publication date |
|---|---|---|---|
| WO 2011-129631 A2 | 20/10/2011 | CN 102939748 A | 20/02/2013 |
| | | CN 102939748 B | 16/12/2015 |
| | | EP 2547101 A2 | 16/01/2013 |
| | | EP 2547101 A4 | 18/12/2013 |
| | | JP 2013-527678 A | 27/06/2013 |
| | | KR 10-2011-0115103 A | 20/10/2011 |
| | | US 2013-0027514 A1 | 31/01/2013 |
| | | US 9313442 B2 | 12/04/2016 |
| | | WO 2011-129631 A3 | 15/12/2011 |
| WO 2012-099359 A2 | 26/07/2012 | WO 2012-099359 A3 | 06/12/2012 |
| KR 10-2011-0115103 A | 20/10/2011 | CN 102939748 A | 20/02/2013 |
| | | CN 102939748 B | 16/12/2015 |
| | | EP 2547101 A2 | 16/01/2013 |
| | | EP 2547101 A4 | 18/12/2013 |
| | | JP 2013-527678 A | 27/06/2013 |
| | | US 2013-0027514 A1 | 31/01/2013 |
| | | US 9313442 B2 | 12/04/2016 |
| | | WO 2011-129631 A2 | 20/10/2011 |
| | | WO 2011-129631 A3 | 15/12/2011 |
| KR 10-2011-0072181 A | 29/06/2011 | KR 10-1289267 B1 | 07/08/2013 |
| | | US 2011-0149153 A1 | 23/06/2011 |
| WO 2013-088986 A1 | 20/06/2013 | EP 2793464 A1 | 22/10/2014 |
| | | EP 2793464 A4 | 02/09/2015 |
| | | JP 2015-088986 A1 | 27/04/2015 |
| | | RU 2014123510 A | 20/12/2015 |
| | | US 2014-0310762 A1 | 16/10/2014 |

Form PCT/ISA/210 (patent family annex) (January 2015)